# EUROPEAN PATENT SPECIFICATION

(11) **EP 4 430 419 B1**
(45) Date of publication and mention of the grant of the patent: **24.09.2025**
(21) Application number: 22786151.5
(22) Date of filing: 26.08.2022
(51) Int. Cl.: G01S 5/02, G01S 5/00, G01S 5/10, H04L 5/00, H04W 4/02, H04W 64/00, G01S 5/06, H04W 84/06

(54) **TIMING RELATIONSHIP ENHANCEMENTS FOR ASSISTANCE DATA FOR NON-TERRESTRIAL NETWORK POSITIONING**
VERBESSERUNG DER TIMING-BEZIEHUNGEN FÜR HILFSDATEN ZUR NICHT TERRESTRISCHEN NETZWERKPOSITIONIERUNG
AMÉLIORATIONS DE RELATION DE SYNCHRONISATION POUR DES DONNÉES D'ASSISTANCE POUR POSITIONNEMENT DE RÉSEAU NON TERRESTRE

(30) Priority: 09.11.2021 GR 20210100780
(43) Date of publication of application: 18.09.2024
(60) Divisional application: 25152575.4
(73) Proprietor: QUALCOMM INCORPORATED, San Diego, California 92121-1714 (US)
(72) Inventor: MANOLAKOS, Alexandros, San Diego, California 92121 (US); KUMAR, Mukesh, San Diego, California 92121 (US); YERRAMALLI, Srinivas, San Diego, California 92121 (US)
(74) Representative: Reddie & Grose LLP
(86) International application number: PCT/US2022/041731
(87) International publication number: WO 2023/086143

(56) References cited:
- US-A1- 2019 166 453
- US-A1- 2021 048 502

## Description

### TECHNICAL FIELD

The present disclosure relates generally to communication systems, and more particularly, to wireless communications involving positioning.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

Some communication system may also support a number of cellular network-based positioning technologies, where the geographic location of a wireless device may be determined based on measuring radio signals exchanged between the wireless device and other wireless devices. For example, a distance between a wireless device and a transmission reception point (TRP) may be estimated based on the time it takes for a reference signal (e.g., a positioning reference signal (PRS)) transmitted from the TRP to reach the wireless device. Other examples of cellular network-based positioning technologies may include downlink-based, uplink-based, and/or downlink-and-uplink-based positioning methods.

US 2021/048502 A1 describes that the angle of departure (AOD) of directed beams, e.g., beamformed beams, transmitted by one or more base stations, such as a gNB, and the angle of arrival (AOA) of the directed beams received by a UE may be used to improve positioning accuracy by identifying Line Of Sight (LOS) beams and multipath beams. The differential AOA (DAOA) of a directed beam pair may compared to the differential AOD (DAOD) of the directed beam pair. Matching DAOA and DAOD may be used as an indication that the directed beams in the beam pair are LOS with the UE, whereas a mis-match indicates one or both of the directed beams are multipath. The location of the UE may be estimated using the measurement information, e.g., AOA, RTT, RSTD, etc., obtained from LOS directed beams.

US 2019/166453 A1 describes that angle of arrival (AOA) and differential AOA (DAOA) positioning for a user equipment (UE) is enhanced by using the UE's inertial sensors to track UE motion and change in angular UE orientation. UE location may be computed, by the UE or a location server, using triangulation for AOA measurements relative to a global reference frame or using multilateration for DAOA measurements. The computed UE location may remain accurate even when the UE is moving while obtaining measurements. The UE can also use AOA and DAOA measurements using 3D angles to increase accuracy when the UE and measured base stations are not in the same horizontal plane. 3D angles can also be used to identify whether the UE is close to a serving base station to improve accuracy further. Various non-AOA measurements may also be used to supplement AOA and DAOA measurements.

### BRIEF SUMMARY

The features of the claimed invention are provided in the independent claims, to which reference should now be made. Additional, optional features are provided in the dependent claims.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating an example of a UE positioning based on reference signal measurements in accordance with various aspects of the present disclosure.
FIG. 5A is a diagram illustrating an example of downlink-positioning reference signal (DL-PRS) transmitted from multiple transmission-reception points (TRPs) in accordance with various aspects of the present disclosure.
FIG. 5B is a diagram illustrating an example of uplink-sounding reference signal (UL-SRS) transmitted from a UE in accordance with various aspects of the present disclosure.
FIG. 6 is a diagram illustrating an example of estimating a position of a UE based on multi-round trip time (RTT) measurements from multiple TRPs in accordance with various aspects of the present disclosure.
FIG. 7 is a communication flow illustrating an example multi-RTT positioning procedure in accordance with various aspects of the present disclosure.
FIG. 8 is a diagram illustrating an example of a non-terrestrial network (NTN) architecture based on transparent payload in accordance with various aspects of the present disclosure.
FIG. 9A is a diagram illustrating an example of a network that includes both NTN and TN devices in accordance with various aspects of the present disclosure.
FIG. 9B is a diagram illustrating an example of a network that includes both NTN and TN devices in accordance with various aspects of the present disclosure.
FIG. 10 is a diagram illustrating an example of updating K_offset for a UE after the initial access based on a value list of K_offset in accordance with various aspects of the present disclosure.
FIG. 11 is a diagram illustrating an example of a UE positioning in accordance with various aspects of the present disclosure.
FIG. 12 is a diagram illustrating an example of associating one or more elements of assistance data with a K_offset in accordance with various aspects of the present disclosure.
FIG. 13 is a diagram illustrating an example associating PRS resources with K_offset in accordance with various aspects of the present disclosure.
FIG. 14 is a diagram illustrating an example of associating one or more elements of assistance data with time in accordance with various aspects of the present disclosure.
FIG. 15 is a diagram illustrating an example of a UE applying parameters that change gradually over time in accordance with various aspects of the present disclosure.
FIG. 16 is a flowchart of a method of wireless communication in accordance with aspects presented herein.
FIG. 17 is a flowchart of a method of wireless communication in accordance with aspects presented herein.
FIG. 18 is a diagram illustrating an example of a hardware implementation for an example apparatus in accordance with aspects presented herein.
FIG. 19 is a flowchart of a method of wireless communication in accordance with aspects presented herein.
FIG. 20 is a flowchart of a method of wireless communication in accordance with aspects presented herein.
FIG. 21 is a diagram illustrating an example of a hardware implementation for an example apparatus in accordance with aspects presented herein.
FIG. 22 is a flowchart of a method of wireless communication in accordance with aspects presented herein.
FIG. 23 is a diagram illustrating an example of a hardware implementation for an example apparatus in accordance with aspects presented herein.
FIG. 24 is a flowchart of a method of wireless communication in accordance with aspects presented herein.
FIG. 25 is a diagram illustrating an example of a hardware implementation for an example apparatus in accordance with aspects presented herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

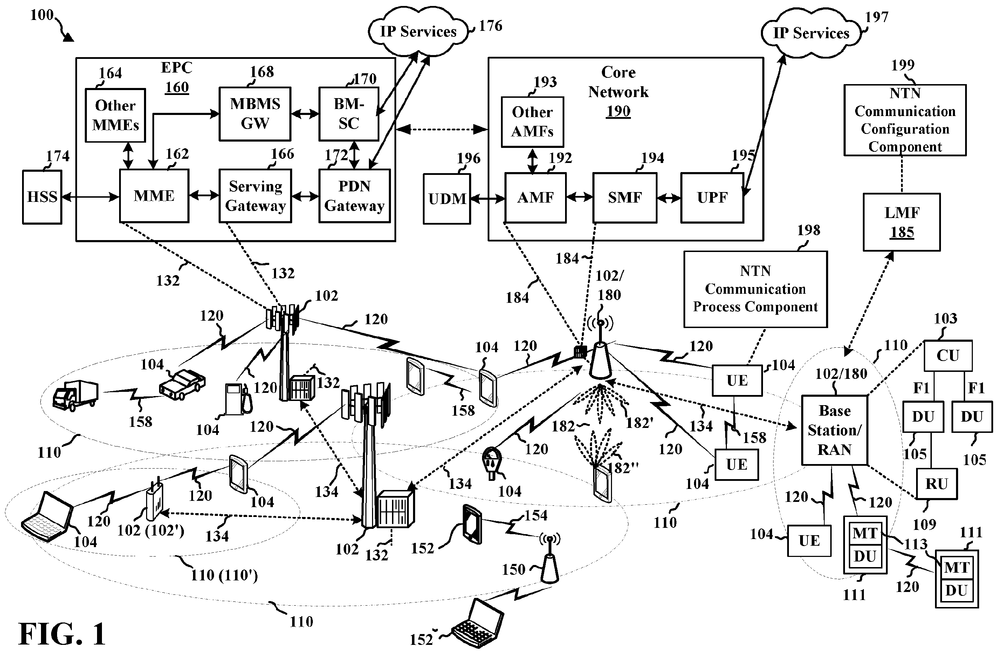

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

Aspects presented herein may improve the accuracy and performance of a UE positioning session associated with an NTN. Aspects presented herein may enable a UE that is accessing an NTN base station to receive various parameters associated with the NTN base station from the NTN base station or from a network entity, such that the UE may apply different parameters when the NTN base station is at a different position or at a different time. For example, the minimum uncertainty and/or the expected RSTD value may be very important in a UE positioning session as they may be used for defining a search window for the measurements (e.g., PRS measurements), which in turn may also be used for defining processing power and latency associated with UE positioning. As relative position of each satellite may be known with respect to other satellites, a UE may be configured (e.g., by the network entity such as an LMF) to associate K_offset with other parameters, such as the expected RSTD value, expected AoA, and expected AoD, etc., between neighbor satellites.

In certain aspects, an LMF 185 (or a network entity) may include an NTN communication configuration component 199 configured to associate one or more positioning related parameters between a UE and an NTN base station with a scheduling offset, a position of the NTN base station, and/or a time. In one configuration, the NTN communication configuration component 199 may be configured to identify a scheduling offset that is associated with an NTN base station. In such configuration, the NTN communication configuration component 199 may transmit, to a UE communicating with the NTN base station, one or more of: a set of expected RSTD values associated with the NTN base station, a set of compensation factors associated with the set of expected RSTD values, a set of uncertainty values associated with the set of expected RSTD values, a set of expected DL-AoD values associated with the NTN base station, or a set of expected AoA values associated with the NTN base station, where the one or more of the set of expected RSTD values, the set of compensation factors, the set of uncertainty values, the set of expected DL-AoD values, or the set of expected AoA values are derived based at least in part on the scheduling offset.

In another configuration, the NTN communication configuration component 199 may be configured to configure an NTN base station to transmit one or more PRSs to a UE. In such configuration, the NTN communication configuration component 199 may transmit, to the UE, AD associated with the NTN base station, the AD including multiple sets of parameters that correspond to a plurality of time durations.

In certain aspects, the UE 104 may include an NTN communication process component 198 configured to apply different communication parameters when communicating with an NTN base station, where the communication parameters may be associated with a scheduling offset and/or a time. In one configuration, the NTN communication process component 198 may be configured to receive, from an NTN base station, a scheduling offset that is associated with the NTN base station. In such configuration, the NTN communication process component 198 may receive, from a network entity, one or more of: a set of expected RSTD values associated with the NTN base station, a set of compensation factors associated with the set of expected RSTD values, a set of uncertainty values associated with the set of expected RSTD values, a set of expected DL-AoD values associated with the NTN base station, or a set of expected AoA values associated with the NTN base station, where the one or more of the set of expected RSTD values, the set of compensation factors, the set of uncertainty values, the set of expected DL-AoD values, or the set of expected AoA values are derived based at least in part on the scheduling offset.

In another configuration, the NTN communication process component 198 may be configured to receive, from a network entity, AD associated with an NTN base station, the AD including multiple sets of parameters that correspond to a plurality of time durations. In such configuration, the NTN communication process component 198 may apply at least one of the multiple sets of parameters based on a time duration in which the UE communicates with the NTN base station.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

In some aspects, a base station 102 or 180 may be referred as a RAN and may include aggregated or disaggregated components. As an example of a disaggregated RAN, a base station may include a central unit (CU) 103, one or more distributed units (DU) 105, and/or one or more remote units (RU) 109, as illustrated in FIG. 1. A RAN may be disaggregated with a split between an RU 109 and an aggregated CU/DU. A RAN may be disaggregated with a split between the CU 103, the DU 105, and the RU 109. A RAN may be disaggregated with a split between the CU 103 and an aggregated DU/RU. The CU 103 and the one or more DUs 105 may be connected via an F1 interface. A DU 105 and an RU 109 may be connected via a fronthaul interface. A connection between the CU 103 and a DU 105 may be referred to as a midhaul, and a connection between a DU 105 and an RU 109 may be referred to as a fronthaul. The connection between the CU 103 and the core network may be referred to as the backhaul. The RAN may be based on a functional split between various components of the RAN, e.g., between the CU 103, the DU 105, or the RU 109. The CU may be configured to perform one or more aspects of a wireless communication protocol, e.g., handling one or more layers of a protocol stack, and the DU(s) may be configured to handle other aspects of the wireless communication protocol, e.g., other layers of the protocol stack. In different implementations, the split between the layers handled by the CU and the layers handled by the DU may occur at different layers of a protocol stack. As one, non-limiting example, a DU 105 may provide a logical node to host a radio link control (RLC) layer, a medium access control (MAC) layer, and at least a portion of a physical (PHY) layer based on the functional split. An RU may provide a logical node configured to host at least a portion of the PHY layer and radio frequency (RF) processing. A CU 103 may host higher layer functions, e.g., above the RLC layer, such as a service data adaptation protocol (SDAP) layer, a packet data convergence protocol (PDCP) layer. In other implementations, the split between the layer functions provided by the CU, DU, or RU may be different.

An access network may include one or more integrated access and backhaul (IAB) nodes 111 that exchange wireless communication with a UE 104 or other IAB node 111 to provide access and backhaul to a core network. In an IAB network of multiple IAB nodes, an anchor node may be referred to as an IAB donor. The IAB donor may be a base station 102 or 180 that provides access to a core network 190 or EPC 160 and/or control to one or more IAB nodes 111. The IAB donor may include a CU 103 and a DU 105. IAB nodes 111 may include a DU 105 and a mobile termination (MT) 113. The DU 105 of an IAB node 111 may operate as a parent node, and the MT 113 may operate as a child node.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR2-2, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

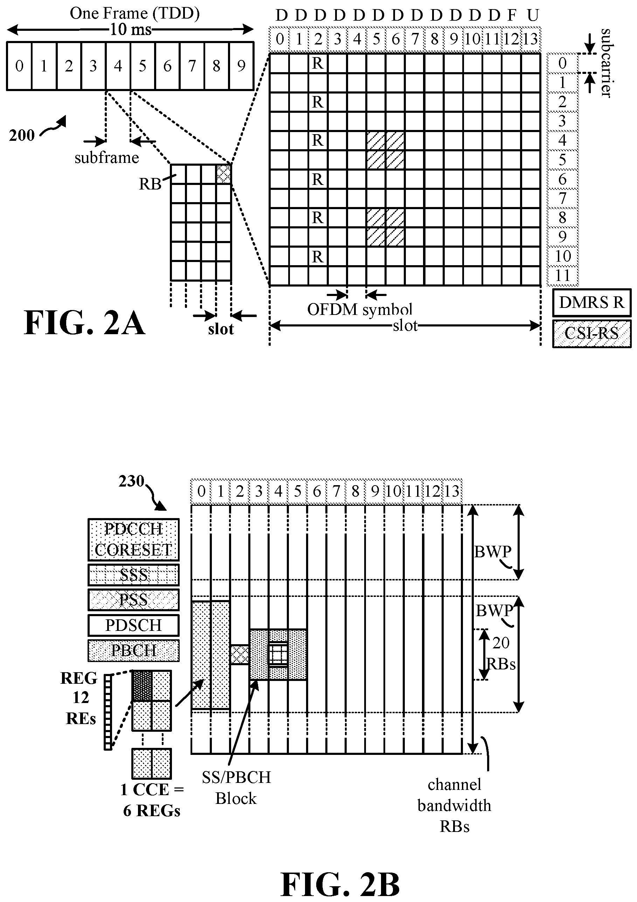

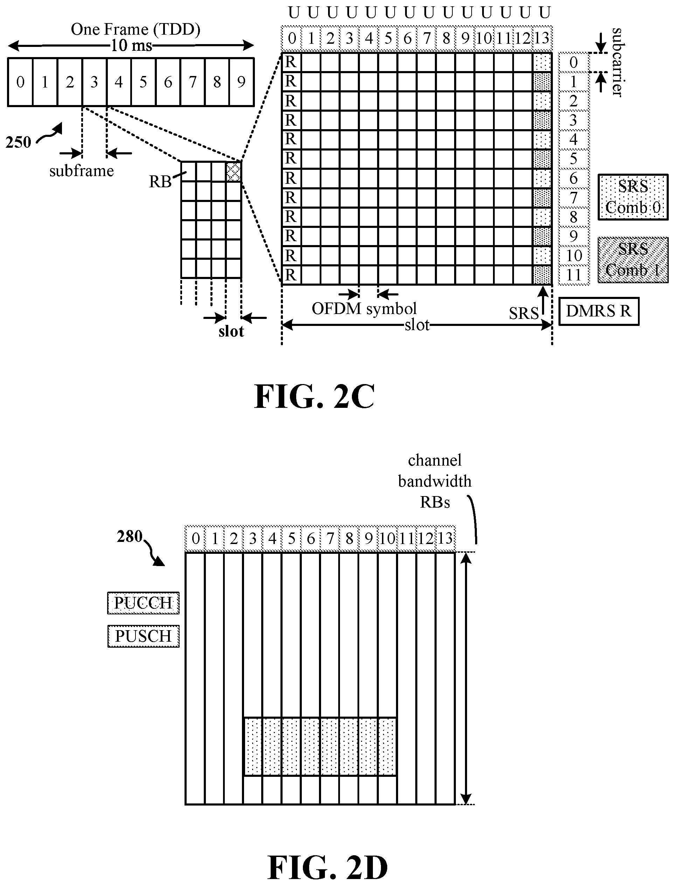

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS** Δ*f* = *2^{µ}*·15 [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

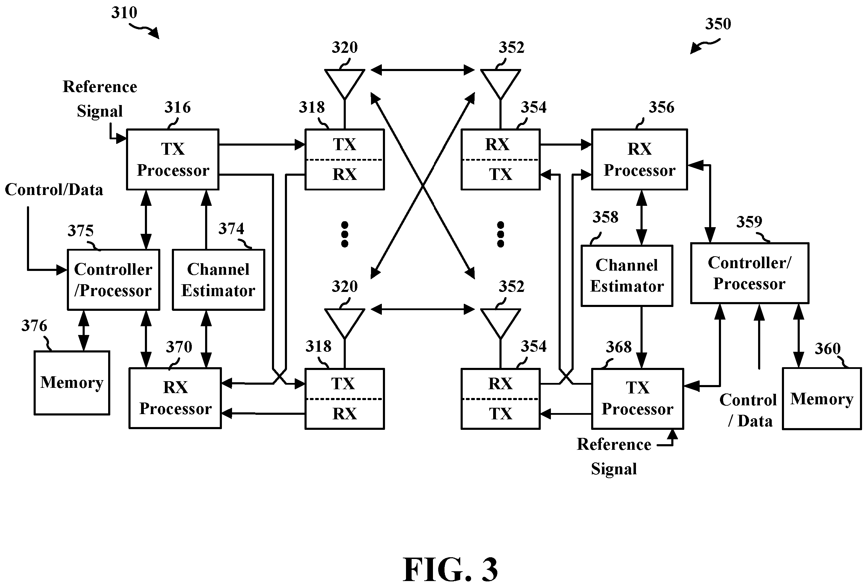

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the NTN communication process component 198 of FIG. 1.

At least one of the TX processor 316, the RX processor 370, and the controller/processor 375 may be configured to perform aspects in connection with the NTN communication configuration component 199 of FIG. 1.

A network may support a number of cellular network-based positioning technologies, such as downlink-based, uplink-based, and/or downlink-and-uplink-based positioning methods. Downlink-based positioning methods may include an observed time difference of arrival (OTDOA) (e.g., in LTE), a downlink time difference of arrival (DL-TDOA) (e.g., in NR), and/or a downlink angle-of-departure (DL-AoD) (e.g., in NR). In an OTDOA or DL-TDOA positioning procedure, a UE may measure the differences between each time of arrival (ToA) of reference signals (e.g., positioning reference signals (PRSs)) received from pairs of base stations, referred to as reference signal time difference (RSTD) measurements or time difference of arrival (TDOA) measurements, and report them to a positioning entity (e.g., a location management function (LMF) 185). For example, the UE may receive identifiers (IDs) of a reference base station (which may also be referred to as a reference cell or a reference gNB) and at least one non-reference base station in assistance data (AD). The UE may then measure the RSTD between the reference base station and each of the non-reference base stations. Based on the known locations of the involved base stations and the RSTD measurements, the positioning entity may estimate a location of the UE. In other words, a position of the UE may be estimated based on measuring reference signals transmitted between the UE and one or more base stations and/or transmission-reception points (TRPs) of the one or more base stations. As such, the PRSs may enable UEs to detect and measure neighbor TRPs, and to perform positioning based on the measurement. For purposes of the present disclosure, the suffixes "-based" and "-assisted" may refer respectively to the node that is responsible for making the positioning calculation (and which may also provide measurements) and a node that provides measurements (but which may not make the positioning calculation). For example, an operation in which measurements are provided by a UE to a base station/positioning entity to be used in the computation of a position estimate may be described as "UE-assisted," "UE-assisted positioning," and/or "UE-assisted position calculation" while an operation in which a UE computes its own position may be described as "UE-based," "UE-based positioning," and/or "UE-based position calculation."

In some examples, the term "TRP" may refer to one or more antennas of a base station whereas the term "base station" may refer to a complete unit (e.g., the base station 102/180). In other words, a TRP may be a set of geographically co-located antennas (e.g. antenna array (with one or more antenna elements)) supporting transmission point (TP) and/or reception point (RP) functionality. For example, a TRP may be similar to a transceiver of a UE. As such, a base station may transmit signal to and/or receive signal from other wireless device (e.g., a UE, another base station, etc.) via one or more TRPs. For purposes of the present disclosure, in some examples, the term "TRP" may be used interchangeably with the term "base station."

For DL-AoD positioning, the positioning entity may use a beam report from the UE of received signal strength measurements of multiple downlink transmit beams to determine the angle(s) between the UE and the transmitting base station(s). The positioning entity may then estimate the location of the UE based on the determined angle(s) and the known location(s) of the transmitting base station(s).

Uplink-based positioning methods may include UL-TDOA and UL-AoA. UL-TDOA is similar to DL-TDOA, but is based on uplink reference signals (e.g., sounding reference signals (SRSs)) transmitted by the UE. For UL-AoA positioning, one or more base stations may measure the received signal strength of one or more uplink reference signals (e.g., SRSs) received from a UE on one or more uplink receive beams. The positioning entity may use the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods may include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or a base station), which transmits an RTT response signal (e.g., an SRS or a PRS) back to the initiator. The RTT response signal may include the difference between the ToA of the RTT measurement signal and the transmission time of the RTT response signal, referred to as the reception-to-transmission (Rx-Tx) time difference. The initiator may calculate the difference between the transmission time of the RTT measurement signal and the ToA of the RTT response signal, referred to as the transmission-to-reception (Tx-Rx) time difference. The propagation time (also referred to as the "time of flight") between the initiator and the responder may be calculated from the Tx-Rx and Rx-Tx time differences. Based on the propagation time and the known speed of light, the distance between the initiator and the responder may be determined. For multi-RTT positioning, a UE may perform an RTT procedure with multiple base stations to enable its location to be determined (e.g., using multilateration) based on the known locations of the base stations. RTT and multi-RTT methods may be combined with other positioning techniques, such as UL-AoA and DL-AoD, to improve location accuracy.

The E-CID positioning method may be based on radio resource management (RRM) measurements. In E-CID, the UE may report the serving cell ID and the timing advance (TA), as well as the identifiers, estimated timing, and signal strength of detected neighbor base stations. The location of the UE may then be estimated based on this information and the known locations of the base station(s).

To assist positioning operations, a network entity (e.g., a location server, an LMF, or an SLP) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations (e.g., in periodically broadcasted overhead messages, etc.). In some cases, the UE may be able to detect neighbor network nodes without the use of assistance data.

In the case of an OTDOA or DL-TDOA positioning procedure, the assistance data may further include an expected RSTD value and an associated uncertainty (e.g., a search space window) around the expected RSTD. In some cases, the value range of the expected RSTD may be plus-minus (+/-) 500 microseconds (µs). In some cases, when any of the resources used for the positioning measurement are in FR1, the value range for the uncertainty of the expected RSTD may be +/-32 µs. In other cases, when all of the resources used for the positioning measurement(s) are in FR2, the value range for the uncertainty of the expected RSTD may be +/-8 µs. In this context, "RSTD" may refer to one or more measurements indicative of a difference in time of arrival between a PRS transmitted by a base station, referred to herein as a "neighbor base station" or a "measuring base station," and a PRS transmitted by a reference base station. A reference base station may be selected by a location server and/or by a UE to provide good or sufficient signal strength observed at a UE, such that a PRS may be more accurately and/or more quickly acquired and/or measured, such as without any special assistance from a serving base station.

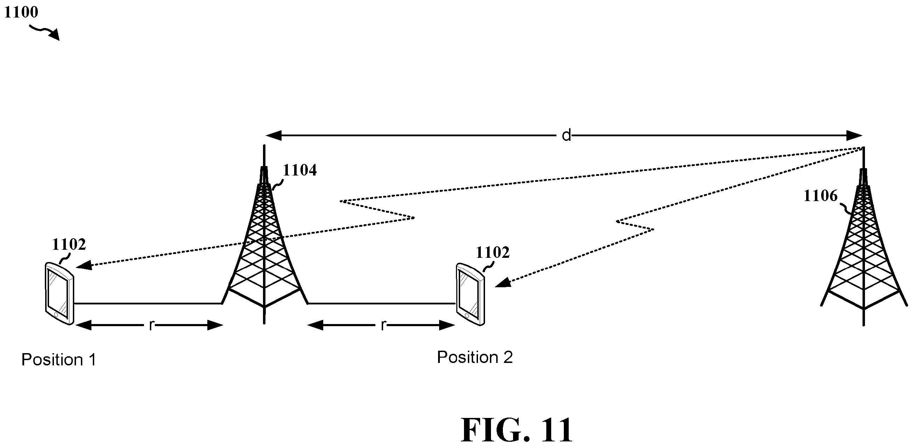

FIG. 11 is a diagram 1100 illustrating an example of a UE positioning in accordance with various aspects of the present disclosure. A UE 1102 may be receive and measure a first PRS transmitted from a measuring base station 1104. By measuring the first PRS transmitted from the measuring base station 1104, the UE 1102 may be able to estimate a distance (r) between the UE 1102 and the measuring base station 1104, but the UE 1102 may not be able to determine its position as the UE 1102 may be at left (or west) of the neighbor base station 1104 (e.g., marked as Position 1 in FIG. 11) or at right (or east) of the neighbor base station 1104 (e.g., marked as Position 2 in FIG. 11). However, if the UE 1102 is also able to measure a second PRS transmitted from a reference base station 1106, then based on the arrival time of the second PRS, the UE 1102 may estimate whether it is at Position 1 or Position 2 as it may take more time for the second PRS to reach Position 1 compared to the time for the second PRS to reach Position 2. As such, by receiving PRSs from multiple base stations and comparing the measurement with a reference base station, a UE's position may be determined. For example, a UE may measure the differences between ToA of PRSs received from pairs of base stations (e.g., RSTD measurements or TDOA measurements) and report them to an LMF. Based on the known locations of the involved base stations and the RSTD measurements, the LMF may estimate a location of the UE. The expected RSTD and the uncertainty associated with the expected RSTD in assistance data may provide the UE with a measurement window to further assist the UE with the measurement and positioning.

A location estimate may also be referred to as a position estimate, location, position, position fix, fix, or the like. A location estimate may be geodetic and include coordinates (e.g., latitude, longitude, and possibly altitude) or may be civic and include a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence). For purposes of the present disclosure, reference signals may include PRS, tracking reference signals (TRS), phase tracking reference signals (PTRS), cell-specific reference signals (CRS), CSI-RS, demodulation reference signals (DMRS), PSS, SSS, SSBs, SRS, etc., depending on whether the illustrated frame structure is used for uplink or downlink communication. In some examples, a collection of resource elements (REs) that are used for transmission of PRS may be referred to as a "PRS resource." The collection of resource elements may span multiple PRBs in the frequency domain and one or more consecutive symbol(s) within a slot in the time domain. In a given OFDM symbol in the time domain, a PRS resource may occupy consecutive PRBs in the frequency domain. In other examples, a "PRS resource set" may refer to a set of PRS resources used for the transmission of PRS signals, where each PRS resource may have a PRS resource ID. In addition, the PRS resources in a PRS resource set may be associated with a same TRP. A PRS resource set may be identified by a PRS resource set ID and may be associated with a particular TRP (e.g., identified by a TRP ID). In addition, the PRS resources in a PRS resource set may have a same periodicity, a common muting pattern configuration, and/or a same repetition factor across slots. The periodicity may be a time from a first repetition of a first PRS resource of a first PRS instance to the same first repetition of the same first PRS resource of the next PRS instance. For example, the periodicity may have a length selected from 2^µ*{4, 5, 8, 10, 16, 20, 32, 40, 64, 80, 160, 320, 640, 1280, 2560, 5120, 10240} slots, where µ = 0, 1, 2, 3. The repetition factor may have a length selected from {1, 2, 4, 6, 8, 16, 32} slots. A PRS resource ID in a PRS resource set may be associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." In some examples, a "PRS instance" or "PRS occasion" may be one instance of a periodically repeated time window (such as a group of one or more consecutive slots) where PRS are expected to be transmitted. A PRS occasion also may be referred to as a "PRS positioning occasion," a "PRS positioning instance," a "positioning occasion," "a positioning instance," a "positioning repetition," or simply an "occasion," an "instance," and/or a "repetition," etc.

A positioning frequency layer (PFL) (which may also be referred to as a "frequency layer") may be a collection of one or more PRS resource sets across one or more TRPs that have the same values for certain parameters. Specifically, the collection of PRS resource sets may have a same subcarrier spacing and cyclic prefix (CP) type (e.g., meaning all numerologies supported for PDSCHs are also supported for PRS), the same Point A, the same value of the downlink PRS bandwidth, the same start PRB (and center frequency), and/or the same comb-size, etc. The Point A parameter may take the value of a parameter *ARFCN*-*ValueNR* (where "ARFCN" stands for "absolute radio-frequency channel number") and may be an identifier/code that specifies a pair of physical radio channel used for transmission and reception. In some examples, a downlink PRS bandwidth may have a granularity of four PRBs, with a minimum of 24 PRBs and a maximum of 272 PRBs. In other examples, up to four frequency layers may be configured, and up to two PRS resource sets may be configured per TRP per frequency layer.

The concept of a frequency layer may be similar to a component carrier (CC) and a BWP, where CCs and BWPs may be used by one base station (or a macro cell base station and a small cell base station) to transmit data channels, while frequency layers may be used by multiple (e.g., two or more) base stations to transmit PRS. A UE may indicate the number of frequency layers it is capable of supporting when the UE sends the network its positioning capabilities, such as during a positioning protocol session. For example, a UE may indicate whether it is capable of supporting one or four PFLs.

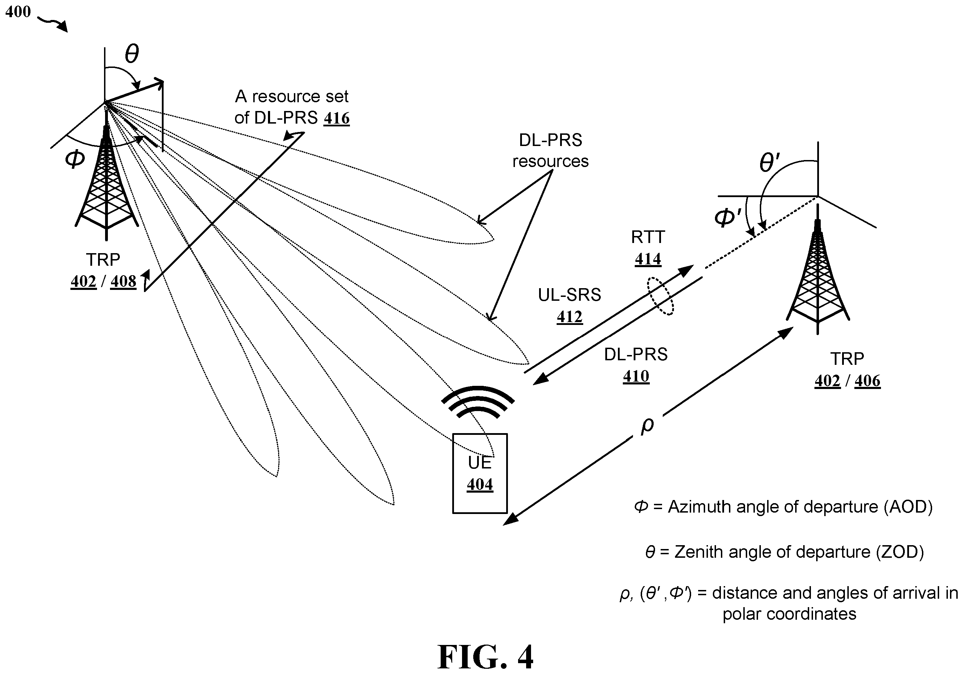

FIG. 4 is a diagram 400 illustrating an example of a UE positioning based on reference signal measurements in accordance with various aspects of the present disclosure. In one example, a location of UE 404 may be estimated based on multi-cell round trip time (multi-RTT) measurements, where multiple TRPs 402 may perform round trip time (RTT) measurements for signals transmitted to and received from the UE 404 to determine the approximate distance of UE 404 with respect to each of the multiple TRPs 402. Similarly, the UE 404 may perform RTT measurements for signals transmitted to and received from the TRPs 402 to determine the approximate distance of each TRP with respect to the UE 404. Then, based at least in part on the approximate distances of UE 404 with respect to the multiple TRPs 402, a location management function (LMF) that is associated with the TRPs 402 and/or the UE 404 may estimate the position of UE 404. For example, a TRP 406 may transmit at least one downlink positioning reference signal (DL-PRS) 410 to the UE 404, and may receive at least one uplink sounding reference signal (UL-SRS) 412 transmitted from the UE 404. Based at least in part on measuring an RTT 414 between the DL-PRS 410 transmitted and the UL-SRS 412 received, a serving base station associated with the TRP 406 or an LMF associated with the TRP 406 may identify the position of UE 404 (e.g., distance) with respect to the TRP 406. Similarly, the UE 404 may transmit UL-SRS 412 to the TRP 406, and may receive DL-PRS 410 transmitted from the TRP 406. Based at least in part on measuring the RTT 414 between the UL-SRS 412 transmitted and the DL-PRS 410 received, the UE 404 or an LMF associated with the UE 404 may identify the position of TRP 406 with respect to the UE 404. The multi-RTT measurement mechanism may be initiated by the LMF that is associated with the TRP 406/408 and/or the UE 404. A TRP may configure UL-SRS resources to a UE via radio resource control (RRC) signaling. In some examples, the UE and the TRP may report the multi-RTT measurements to the LMF, and the LMF may estimate the position of the UE based on the reported multi-RTT measurements.

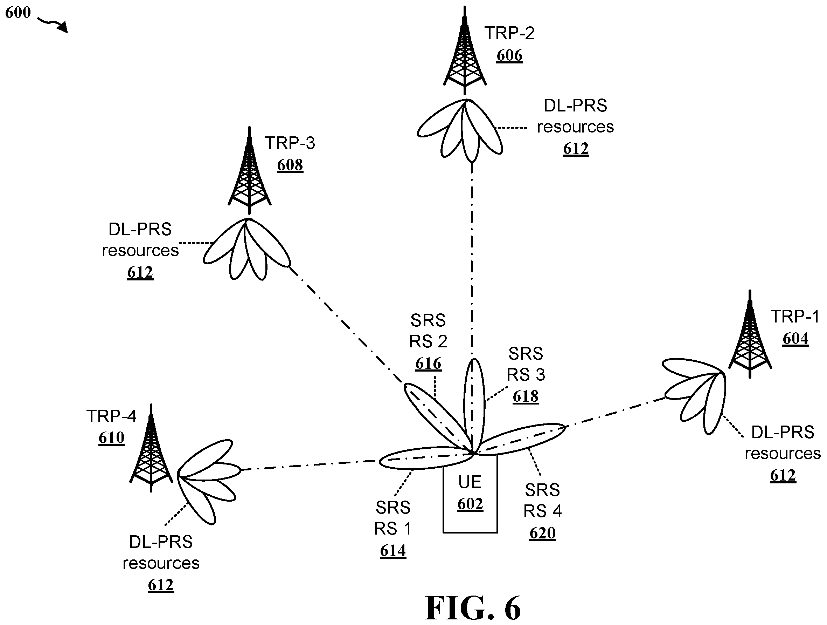

In other examples, a position of a UE may be estimated based on multiple antenna beam measurements, where a downlink angle of departure (DL-AoD) and/or uplink angle of arrival (UL-AoA) of transmissions between a UE and one or more TRPs may be used to estimate the position of the UE and/or the distance of the UE with respect to each TRP. For example, referring back to FIG. 6, with regard to the DL-AoD, the UE 404 may perform reference signal received power (RSRP) measurements for a set of DL-PRS 416 transmitted from multiple transmitting beams (e.g., DL-PRS beams) of a TRP 408, and the UE 404 may provide the DL-PRS beam measurements to a serving base station (or to the LMF associated with the base station). Based on the DL-PRS beam measurements, the serving TRP or the LMF may derive the azimuth angle (e.g., *Φ*) of departure and the zenith angle (e.g., *θ*) of departure for DL-PRS beams of the TRP 408. Then, the serving TRP or the LMF may estimate the position of UE 404 with respect to the TRP 408 based on the azimuth angle of departure and the zenith angle of departure of the DL-PRS beams. Similarly, for the UL-AoA, a position of a UE may be estimated based on UL-SRS beam measurements measured at different TRPs, such as at the TRPs 402. Based on the UL-SRS beam measurements, a serving base station or an LMF associated with the serving base station may derive the azimuth angle of arrival and the zenith angle of arrival for UL-SRS beams from the UE, and the serving base station or the LMF may estimate the position of the UE and/or the UE distance with respect to each of the TRPs based on the azimuth angle of arrival and the zenith angle of arrival of the UL-SRS beams.

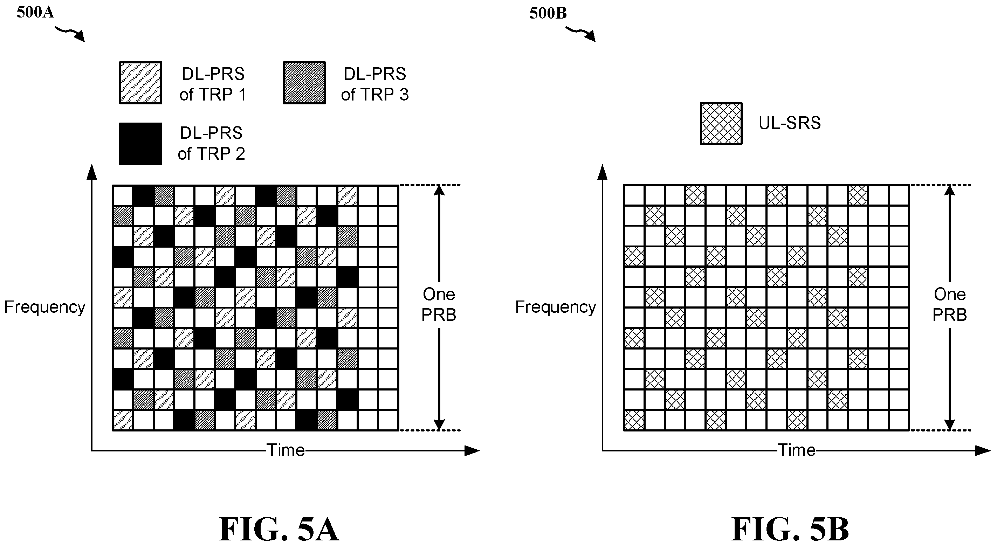

FIG. 5A is a diagram 500A illustrating an example of DL-PRS transmitted from multiple TRPs in accordance with various aspects of the present disclosure. In one example, a serving base station may configure DL-PRS to be transmitted from one or more TRPs within a slot or across multiple slots. If the DL-PRS is configured to be transmitted within a slot, the serving base station may configure the starting resource element in time and frequency from each of the one or more TRPs. If the DL-PRS is configured to be transmitted across multiple slots, the serving base station may configure gaps between DL-PRS slots, periodicity of the DL-PRS, and/or density of the DL-PRS within a period. The serving base station may also configure the DL-PRS to start at any physical resource block (PRB) in the system bandwidth. In one example, the system bandwidth may range from 24 to 276 PRBs in steps of 4 PRBs (e.g., 24, 28, 32, 36, etc.). The serving base station may transmit the DL-PRS in PRS beams, where a PRS beam may be referred to as a "PRS resource" and a full set of PRS beams transmitted from a TRP on a same frequency may be referred to as a "PRS resource set" or a "resource set of PRS," such as described in connection with FIG. 4. As shown by FIG. 5A, the DL-PRS transmitted from different TRPs and/or from different PRS beams may be multiplexed across symbols or slots.

In some examples, each symbol of the DL-PRS may be configured with a comb-structure in frequency, where the DL-PRS from a TRP of a base station may occupy every *N*^{th} subcarrier. The comb value N may be configured to be 2, 4, 6, or 12. The length of the PRS within one slot may be a multiple of N symbols and the position of the first symbol within a slot may be flexible as long as the slot consists of at least N PRS symbols. The diagram 500A shows an example of a comb-6 DL-PRS configuration, where the pattern for the DL-PRS from different TRPs may be repeated after six (6) symbols.

FIG. 5B is a diagram 500B illustrating an example of UL-SRS transmitted from a UE in accordance with various aspects of the present disclosure. In one example, the UL-SRS from a UE may be configured with a comb-4 pattern, where the pattern for UL-SRS may be repeated after four (4) symbols. Similarly, the UL-SRS may be configured in an SRS resource of an SRS resource set, where each SRS resource may correspond to an SRS beam, and the SRS resource sets may correspond to a collection of SRS resources (e.g., beams) configured for a TRP. In some examples, the SRS resources may span 1, 2, 4, 8, or 12 consecutive OFDM symbols. In other examples, the comb size for the UL-SRS may be configured to be 2, 4, or 8.

FIG. 6 is a diagram 600 illustrating an example of estimating a position of a UE based on multi-RTT measurements from multiple TRPs in accordance with various aspects of the present disclosure. A UE 602 may be configured by a serving base station to decode DL-PRS resources 612 that correspond to and are transmitted from a first TRP 604 (TRP-1), a second TRP 606 (TRP-2), a third TRP 608 (TRP-3), and a fourth TRP 610 (TRP-4). The UE 602 may also be configured to transmit UL-SRSs on a set of UL-SRS resources, which may include a first SRS resource 614, a second SRS resource 616, a third SRS resource 618, and a fourth SRS resource 620, such that the serving cell(s), e.g., the first TRP 604, the second TRP 606, the third TRP 608, and the fourth TRP 610, and as well as other neighbor cell(s), may be able to measure the set of the UL-SRS resources transmitted from the UE 602. For multi-RTT measurements based on DL-PRS and UL-SRS, as there may be an association between a measurement of a UE for the DL-PRS and a measurement of a TRP for the UL-SRS, the smaller the gap is between the DL-PRS measurement of the UE and the UL-SRS transmission of the UE, the better the accuracy may be for estimating the position of the UE and/or the distance of the UE with respect to each TRP.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink or uplink positioning reference signals, unless otherwise indicated by the context. To further distinguish the type of PRS, a downlink positioning reference signal may be referred to as a "DL-PRS," and an uplink positioning reference signal (e.g., an SRS-for-positioning, PTRS) may be referred to as an "UL-PRS." In addition, for signals that may be transmitted in both the uplink and downlink (e.g., DMRS, PTRS), the signals may be prepended with "UL" or "DL" to distinguish the direction. For example, "UL-DMRS" may be differentiated from "DL-DMRS."

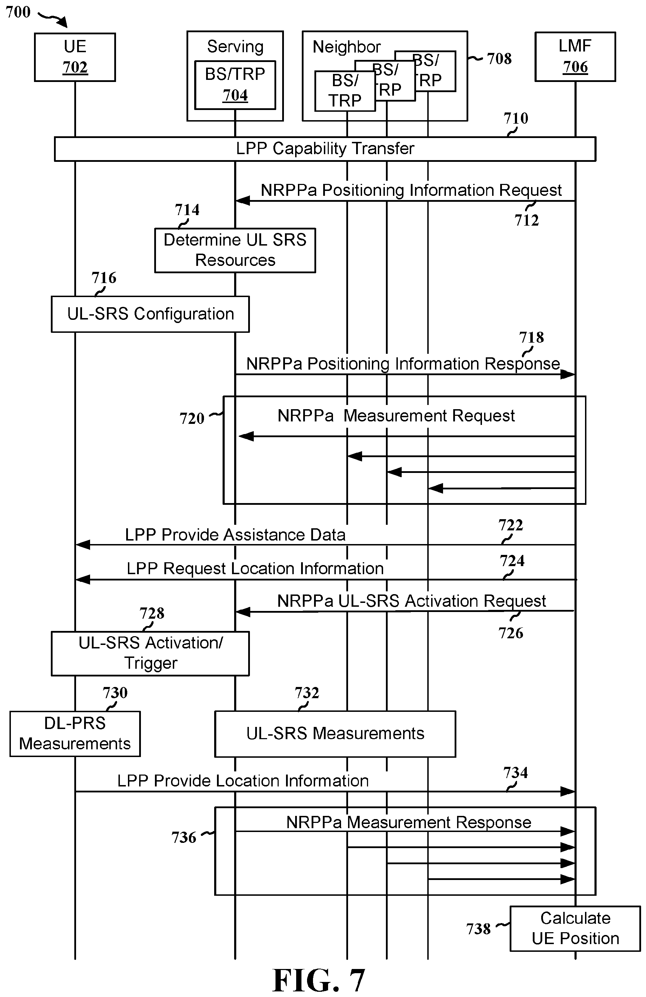

FIG. 7 is a communication flow 700 illustrating an example multi-RTT positioning procedure in accordance with various aspects of the present disclosure. The numberings associated with the communication flow 700 do not specify a particular temporal order and are merely used as references for the communication flow 700. In addition, a DL-only and/or an UL-only positioning may use a subset or subsets of this multi-RTT positioning procedure.

At 710, an LMF 706 (e.g., the LMF 185, or a network entity) may request one or more positioning capabilities from a UE 702 (e.g., from a target device). In some examples, the request for the one or more positioning capabilities from the UE 702 may be associated with an LTE Positioning Protocol (LPP). For example, the LMF 706 may request the positioning capabilities of the UE 702 using an LPP capability transfer procedure.

At 712, the LMF 706 may request UL SRS configuration information for the UE 702. The LMF 706 may also provide assistance data specified by a serving base station 704 (e.g., pathloss reference, spatial relation, and/or SSB configuration(s), etc.). For example, the LMF 706 may send an NR Positioning Protocol A (NRPPa) positioning information request message to the serving base station 704 to request UL information for the UE 702.

At 714, the serving base station 704 may determine resources available for UL SRS, and at 716, the serving base station 704 may configure the UE 702 with one or more UL SRS resource sets based on the available resources.

At 718, the serving base station 704 may provide UL SRS configuration information to the LMF 706, such as via an NRPPa positioning information response message.

At 720, the LMF 706 may select one or more candidate neighbor BSs/TRPs 708, and the LMF 706 may provide an UL SRS configuration to the one or more candidate neighbor BSs/TRPs 708 and/or the serving base station 704, such as via an NRPPa measurement request message. The message may include information for enabling the one or more candidate neighbor BSs/TRPs 708 and/or the serving base station to perform the UL measurements.

At 722, the LMF 706 may send a LPP provide assistance data message to the UE 702. The message may include specified assistance data for the UE 702 to perform the DL measurements.

At 724, the LMF 706 may send a LPP request location information message to the UE 702 to request multi-RTT measurements.

At 726, for semi-persistent or aperiodic UL SRS, the LMF 706 may request the serving base station 704 to activate/trigger the UL SRS in the UE 702. For example, the LMF 706 may request activation of UE SRS transmission by sending an NRPPa positioning activation request message to the serving base station 704.

At 728, the serving base station 704 may activate the UE SRS transmission and send an NRPPa positioning activation response message. In response, the UE 702 may begin the UL-SRS transmission according to the time domain behavior of UL SRS resource configuration.

At 730, the UE 702 may perform the DL measurements from the one or more candidate neighbor BSs/TRPs 708 and/or the serving base station 704 provided in the assistance data. At 732, each of the configured one or more candidate neighbor BSs/TRPs 708 and/or the serving base station 704 may perform the UL measurements.

At 734, the UE 702 may report the DL measurements to the LMF 706, such as via an LPP provide location information message.

At 736, each of the one or more candidate neighbor BSs/TRPs 708 and/or the serving base station 704 may report the UL measurements to the LMF 706, such as via an NRPPa measurement response message.

At 738, the LMF 706 may determine the RTTs from the UE 702 and BS/TRP Rx-Tx time difference measurements for each of the one or more candidate neighbor BSs/TRPs 708 and/or the serving base station 704 for which corresponding UL and DL measurements were provided at 734 and 736, and the LMF 706 may calculate the position of the UE 702.

In some scenarios, a positioning procedure may be associated with one or more non-terrestrial networks (NTNs). In some examples, NTNs may refer to networks, or segments of networks, using an airborne (e.g., an aircraft) or satellites (e.g., low earth orbit (LEO) satellites, medium earth orbit (MEO) satellites, geosynchronous (GEO) satellites, and/or high-altitude pseudo satellite (HAPS), etc.) for transmission. For example, an NTN may support direct communications between a UE (e.g., a handset, a mobile device, a mobile phone, etc.) and a satellite (e.g., an LEO satellite, or a GEO satellite, etc.), where the UE may transmit text messages and/or voice services to another UE via the satellite. In some aspects, determining a position of a UE may be an important factor for an NTN. For example, location information of a UE may be used in a random access network (RAN) for an initial synchronization, uplink timing and frequency pre-compensation, mobility, and/or handover, etc. In addition, an NTN may support different types of UEs, such as UEs with global navigation satellite system (GNSS) support (e.g., the positions of the UEs may be determined via global positioning system (GPS)) and/or UEs without GNSS support.

One advantage of a UE performing a positioning session with an NTN over GNSS (e.g., with GNSS support) is that the communication link between the UE and a satellite may enable the UE to interact with the satellite. For example, the PRS signals transmitted from a satellite may be tailored to or configured for a specific user or a specific device. As such, the performance and/or the accuracy of a positioning of a UE based on GNSS (e.g., based on GPS) may further be supplemented with the assistance of an NTN as the UE and/or the satellite may exchange positioning related information with each other.

On the other hand, a UE may also perform a positioning session with an NTN without GNSS support. For examples, for UEs without GNSS support, the network-based positioning methods and mechanisms discussed in connection with FIGs. 4 to 6 (e.g., multi-RTT, and/or OTDOA, etc.) may also be used for determining the location of the UE. For purposes of the present disclosure, an NTN may include just NTN cell(s), or a mix of NTN cell(s) and ground cell(s). As such, for a positioning operation associated with an NTN, the positioning operation may involve NTN cell(s) without ground cell(s), a mix of NTN and ground cells, and/or hybrid solutions involving NTN cells, ground cells, GNSS satellites, and/or other ground based positioning reference points such as WiFi, Bluetooth, etc.

For a UE positioning session based on multi-RTT, a UE and one or more TRPs may measure and report their Rx-Tx timing difference to a location server (e.g., an LMF) separately. The report may include time-stamps (e.g., SFN and/or slot number) at which the measurements for the Rx-Tx timing difference are performed, which may be based on which RTT is to be computed between the UE and the one or more TRPs. In some examples, the Rx-Tx timing difference may be specified to be with a range of plus-minus (+/-) 500 us (e.g., for a quantization of 21 bits with a step size of Tc=0.5ns), and the corresponding time stamp may be limited within a duration of 10.24 seconds. Thus, UL and DL measurements may be performed at a different time by the UE and/or the one or more TRPs.

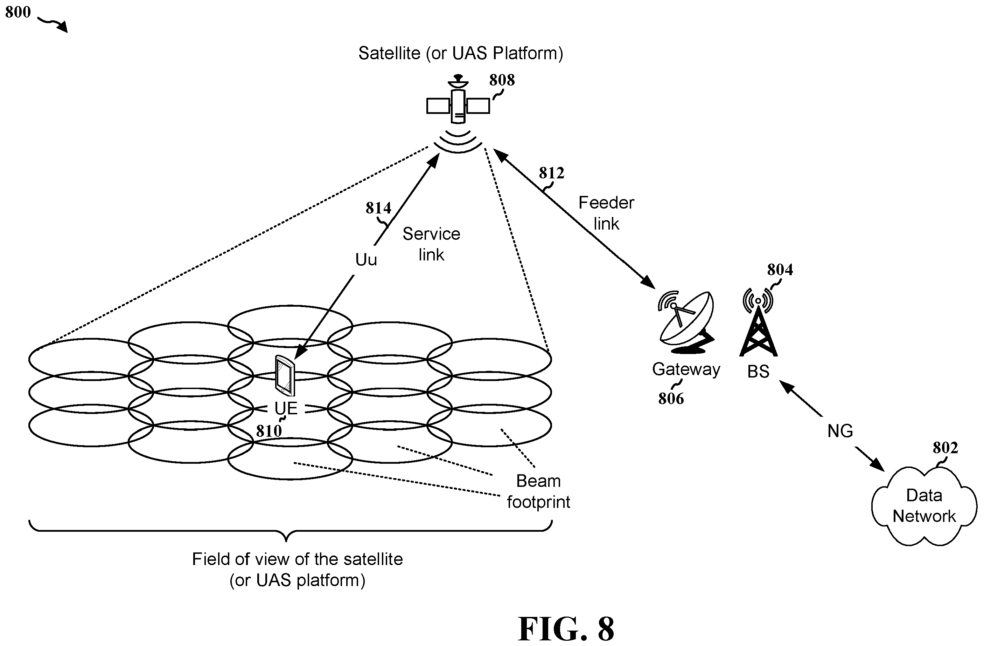

FIG. 8 is a diagram 800 illustrating an example of an NTN architecture based on transparent payload in accordance with various aspects of the present disclosure. A data network 802 (e.g., a 5G core (5GC) network) may connect to a base station 804 (e.g., an gNB) via a communication interface (e.g., a next generation (NG) interface). The base station 804 may be located on the ground and connected to an NTN gateway 806, where the NTN gateway 806 may be connected to an NTN payload 808 (e.g., a network node embarked onboard a satellite, an unmanned aircraft systems (UAS), or HAPS, etc.) via a feeder link 812. The NTN payload 808 may connect to a UE 810 via a service link 814 (e.g., using the UE-UTRAN (Uu) interface). Under the transparent payload NTN architecture, the base station 804 may be a ground station and the NTN payload 808 (e.g., the satellite) may function like a relay, where the NTN payload 808 may provide radio frequency filtering, frequency conversion, and/or amplification for data/payload received from the base station 804 via the NTN gateway 806 and relay/transmit the data/payload to the UE 810. As such, the waveform signal relayed/repeated by the NTN payload 808 may be un-changed. In some examples, the ground area(s) covered by the NTN payload 808 may be referred to as "footprint(s)." The footprint of a satellite may be a ground area in which its transponders offer coverage, and the footprint may also determine the satellite dish diameter for receiving each transponder's signal. In some examples, there may be a different coverage map for each transponder (or group of transponders), as each transponder may be configured to cover different areas.

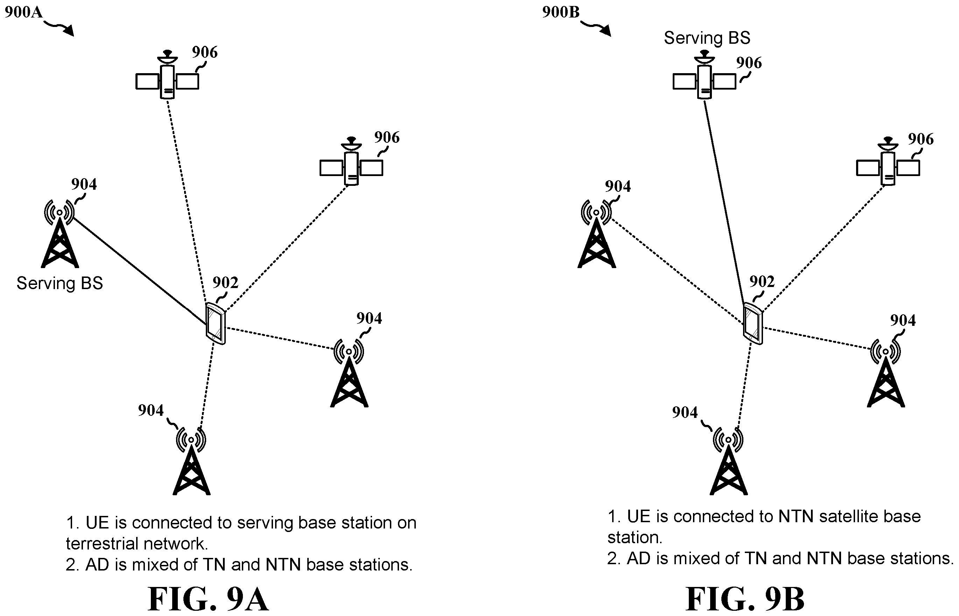

In some examples, a communication network may include both NTN and terrestrial network (TN). In other words, a segment of an NTN may be operating based on non-terrestrial device(s) and another segment of the NTN may be operating based on terrestrial device(s). For example, FIGs. 9A and 9B are diagrams 900A and 900B illustrating examples of a network that includes both NTN and TN devices in accordance with various aspects of the present disclosure. An NTN may include one or more TN devices 904 (e.g., ground base stations and/or TRPs) and one or more NTN devices 906 (e.g., satellites and/or aircrafts), where a UE 902 in a positioning session may transmit or receive signals (e.g., PRSs, SRSs, etc.) with both TN devices 904 and NTN devices 906, such as described in connection with FIG. 6. In some examples, as shown by the diagram 900A, a serving base station may be a TN device, such that the UE 902 may be connected to the serving base station via a TN network. In other examples, as shown by the diagram 900B, the serving base station may be an NTN device, such that the UE 902 may be connected to an NTN satellite base station. In both scenarios, the assistance data (AD) associated with the UE positioning session may include a mixed of TN and NTN base stations. For purposes of the present disclosure, a base station that is located on an NTN device (e.g., a satellite, an aircraft, or an UAS platform, etc.) may be referred to as an "NTN base station," an "NTN satellite base station," and/or an "NTN base station satellite." On the other hand, a base station that is located on the earth may be referred to as an "TN base station" and/or a "terrestrial base station."

Each NTN base station may move with different speeds, and the coverage of the NTN base station on the earth may keep on changing. In some examples, the change in the NTN base station may be deterministic and known at an LMF level. For example, **Table 1** below shows examples of NTN scenarios versus delay constraints:

**Table 1 - Example of NTN scenarios versus delay constraints**

| **NTN scenarios** | **A** | **B** | **C1** | **C2** | **D1** | **D2** |
|---|---|---|---|---|---|---|
| | *GEO transparent payload* | *GEO regenerative payload* | *LEO transparent payload* | | *LEO regenerative payload* | |
| Satellite altitude | 35786 km | | 600 km | | | |
| Relative speed of Satellite with respect to earth | negligible | | 7.56 km per second | | | |
| Min elevation for both feeder and service links | 10° for service link and 10° for feeder link | | | | | |
| Typical Min / Max NTN beam foot print diameter (note 1) | 100 km / 3500 km | | 50 km / 1000 km | | | |
| Maximum propagation delay contribution to the Round Trip Delay on the radio interface between the gNB and the UE | 541.46 ms (Worst case) | 270.73 ms | 25.77 ms | | 12.89 ms | |
| Minimum propagation delay contribution to the Round Trip Delay on the radio interface between the gNB and the UE | 477.48 ms | 238.74 ms | 8 ms | | 4 ms | |
| Maximum Delay variation as seen by the UE (note 2) | Negligible | | Up to +/- 93.0 µs/sec (Worst case) | | Up to +/- 47.6 µs/sec | |
| NOTE 1: The beam foot print diameter is indicative. The diameter depends on the orbit, earth latitude, antenna design, and radio resource management strategy in a given system. | | | | | | |
| NOTE 2: The delay variation measures how fast the round trip delay (function of UE-satellite-NTN gateway distance) varies over time when the satellite moves towards/away from the UE. It is expressed in µs/s and is negligible for GEO scenario | | | | | | |
| NOTE 3: Void | | | | | | |
| NOTE 4: Speed of light used for delay calculation is 299792458 m/s. | | | | | | |

A serving base station may configure a UE with one or more time-domain resources for receiving data from the base station (e.g., via a PDSCH) or for transmitting data to the base station (e.g., via a PUSCH), where the base station may transmit the configuration to the UE via a PDCCH. The base station may also schedule various types of scheduling offsets or processing timelines for the UE such that the UE may have sufficient time to process the data, tune its beam(s), provide feedback (e.g., HARQ ACK/NACK), and/or receive retransmissions, etc. For example, a base station may schedule an offset for a UE between the time a downlink (DL) grant or an uplink (UL) grant is transmitted to the UE and the time the UE receives a corresponding PDSCH (e.g., the DL data) or transmits a corresponding PUSCH (e.g., the UL data), where an offset K₀ may indicate the delay (e.g., in slots) between the DL grant reception and the corresponding PDSCH reception, and an offset K₂ may indicate the delay between the UL grant reception and the corresponding PUSCH transmission. In some examples, the base station may further schedule an additional offset K₁ and/or offset K₃ for the UE, where the offset K₁ may indicate the delay between a PDSCH reception and a corresponding HARQ feedback (e.g., ACK/NACK) transmission on the UL, and the offset K₃ may indicate the delay between a HARQ feedback reception in the UL and a corresponding retransmission of a PDSCH on the DL.

As the distance between an NTN base station and a ground UE (e.g., a UE on the Earth) may be very far (e.g., more than 30,000 kilometers), the propagation delay for communications between an NTN base station and a ground UE may be much longer compared to the propagation delay for communications between a terrestrial base station and a ground UE. For example, as shown by the Table 1, a GEO satellite with transparent payload architecture may have a propagation delay of up to 541.46 ms. As such, when a UE is accessing an NTN base station, an additional offset may be configured for the UE by the NTN base station or an LMF for addressing propagation and/or processing delays. For example, if the NTN base station transmits DCI to the UE to schedule a data to be received by the UE at slot n, the UE may expect to receive the data at slot n plus the additional offset. In some examples, this additional offset may be referred to as a "K_offset," "Koffset," or "K offset."

In some scenarios, when a UE is performing an initial access to an NTN base station, the NTN base station may provide the UE with the K_offset via a system information message, where the K_offset may be cell-specific/satellite-specific. In one example, the NTN base station may signal one offset value for the K_offset, where the one offset value may be used by the UE for covering the RTT of a service link (e.g., the service link 814) plus the RTT between the NTN base station (e.g., the serving satellite) and a reference point. In other words, one offset value may be indicated by system information for K_offset that is expected to cover the RTT of service link plus the RTT between the serving satellite and reference point. This may provide a simple way of indicating a cell-specific K_offset in system information and may provide a certain configuration flexibility. Furthermore, the one cell-specific K_offset may be sufficient for both DL-UL alignment and DL-UL non-alignment cases. In another example, the NTN base station may signal a first offset value and a second offset value, where the K_offset may be equal to the sum of the two offset values (e.g., K_offset = first offset value + second offset value). The first offset value may be used for covering the RTT between the NTN base station and a reference point or may be determined by a common TA, and the second offset value may be used for covering the RTT of service link. In other words, a cell-specific K_offset may be determined by two offset values, where the first offset value may be determined by common TA and the second offset value may be expected to cover RTT of service link winch is indicated by system information.

As an NTN base station may be moving at a high speed and the coverage of the NTN base station may keep on changing, in some examples, after a UE establishes an initial access with an NTN base station, the NTN base station may update the UE with new K_offset, such as via an RRC reconfiguration or a MAC-CE. For example, in some scenarios, the maximum satellite beam size may be up to 3500 km for a GEO satellite and 1000 km for a LEO satellite, which may result in up to 10.3 ms for the GEO satellite and 3.2 ms for the LEO satellite maximum differential delay within a satellite beam. Even with one beam mapped to one cell, in such a large cell, the RTT values of different UEs may differ up to 20.6 ms for the GEO satellite and 6.4 ms for the LEO satellite. This may apply to both the serving cell as well as neighbor cell(s). Thus, if a UE continues to use a cell-specific or beam-specific K_offset value broadcast by the system information after initial access, it may cause a scheduling delay, such as in the scene of earth fixed beam. In addition, considering RTT may be rapidly changed for a LEO satellite, frequent K_offset update with dedicated RRC signaling and/or MAC-CE may not be desired. For example, to update K_offset, each UE may be specified to report its TA value to an NTN base station and the NTN base station may also be specified to monitor each UE's TA change. Therefore, there may be a high signaling overhead and the UE's power consumption may be increased.

In one example, to avoid frequent K_offset update with dedicated RRC signaling and/or MAC-CE, a network (e.g., an NTN base station) may configure a value list of K_offset for a UE, e.g., {K0, K1, K2, ...} and an update cycle (P) through RRC configuration/reconfiguration based on the UE's location and satellite ephemeris. Then, the UE may sequentially determine the current value of K_offset from the value list of K_offset based in part on the update cycle (P).

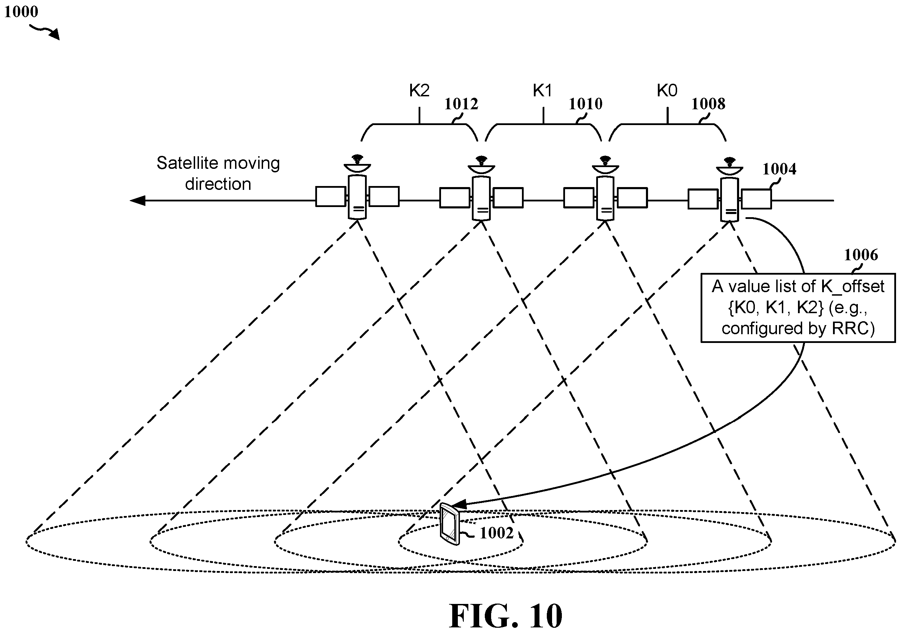

FIG. 10 is a diagram 1000 illustrating an example of updating K_offset for a UE after the initial access based on a value list of K_offset in accordance with various aspects of the present disclosure. A UE 1002 may establish a communication with an NTN base station 1004 based on an initial K_offset obtained through the system information broadcasted by the NTN base station 1004. After the initial access, as shown at 1006, the NTN base station 1004 may provide the UE 1002 with a value list of K_offset, such as via an RRC configuration/reconfiguration. The value list of K_offset may include multiple offset values K0, K1, K2, ... etc., and the UE may sequentially determine the current value of K_offset from the value list of K_offset. For example, as shown at 1008, after the UE is configured with the value list of K_offset that includes offset values K0, K1, and K2, the UE 1002 may apply a first offset value K0 for the K_offset if the NTN base station 1004 is between a first position and a second position; as shown at 1010, the UE 1002 may apply a second offset value K1 for the K_offset if the NTN base station 1004 is between the second position and a third position; and shown at 1012, the UE 1002 may apply a third offset value K2 for the K_offset if the NTN base station 1004 is between the third position and a fourth position, etc. As such, the high signaling overhead resulting from frequently updating the K_offset value may be avoided or reduced.

As the maximum satellite beam size may be more than 1000 km which may result in a high maximum differential delay within a satellite beam, in a positioning context, this may be seen as an expected RSTD which is an measure of RTT divided by two (e.g., RTT/2) that keeps on changing because of the satellite movement and/or the UE movement. As described in connection with FIG. 10, an NTN base station's movement for RTT may be tracked or determined by the UE by providing the UE with multiple K_offset values in an RRC configuration/reconfiguration message or in a MAC-CE. For example, an NTN base station may provide a value list of K_offset to a UE and the UE may select one K_offset value based on a predefined algorithm.

Aspects presented herein may improve the accuracy and performance of a UE positioning session associated with an NTN. Aspects presented herein may enable a UE that is accessing an NTN base station to receive various parameters associated with the NTN base station from the NTN base station or from a network entity (e.g., an LMF), such that the UE may apply different parameters when the NTN base station is at a different position or at a different time. For example, the minimum uncertainty and/or the expected RSTD value may be very important in a UE positioning session as they may be used for defining a search window for the measurements (e.g., PRS measurements), which in turn may also be used for defining processing power and latency associated with UE positioning. As relative position of each satellite may be known with respect to other satellites, a UE may be configured (e.g., by the network entity such as an LMF) to associate K_offset with other parameters, such as the expected RSTD value, expected AoA, and expected AoD, etc., between neighbor satellites.

In one aspect of the present disclosure, an LMF may be configured to associate one or more elements of assistance data with a K_offset, such that a UE communicating with an NTN base station may apply different communication parameters based at least in part on the position of the NTN base station and/or based on a current value of the K_offset.

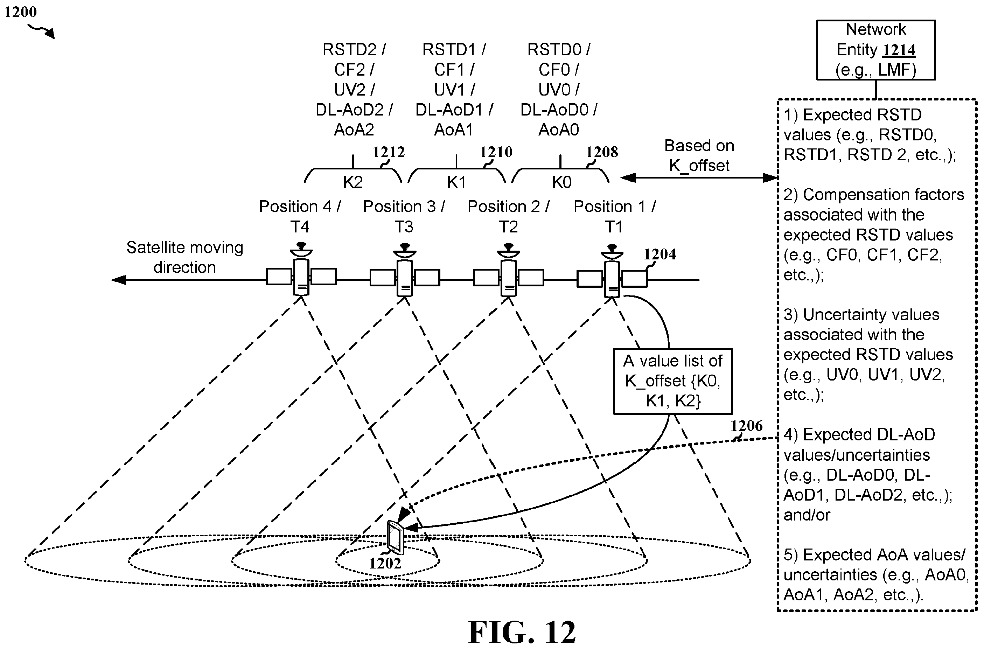

FIG. 12 is a diagram 1200 illustrating an example of associating one or more elements of assistance data with a K_offset in accordance with various aspects of the present disclosure. A UE 1202 may be communicating with an NTN base station 1204 based on an initial K_offset obtained through the system information broadcasted by the NTN base station 1204. After the initial access, the NTN base station 1204 may provide the UE 1202 with a value list of K_offset, such as via an RRC configuration/reconfiguration. The value list of K_offset may include multiple offset values K0, K1, K2... etc., and the UE may sequentially determine the current value of K_offset from the value list of K_offset. For example, as shown at 1208, after the UE is configured with the value list of K_offset that includes offset values K0, K1, and K2, the UE 1202 may apply a first offset value K0 for the K_offset if the NTN base station 1204 is between a first position (e.g., Position 1) and a second position (e.g., Position 2); as shown at 1212, the UE 1202 may apply a second offset value K1 for the K_offset if the NTN base station 1204 is between the second position and a third position (e.g., Position 3); and shown at 1212, the UE 1202 may apply a third offset value K2 for the K_offset if the NTN base station 1204 is between the third position and a fourth position (e.g., Position 4), etc.

In one aspect, as shown at 1206, in addition to the K_offset, a network entity 1214 (e.g., an LMF) may also provide the UE 1202 (e.g., via assistance data) with one or more communication related parameters, such that the UE 1202 may apply different communication parameters for communicating with the NTN base station 1204 based on the position of the NTN base station or based on a time / time duration in which the UE is in. Some of the communication related parameters may be derived based at least in part on the K_offset.

In one example, the network entity 1214 may associate a set of expected RSTD values for PRSs transmitted from the NTN base station 1204 with the K_offset, where the set of expected RSTD values may correspond to the offset values within the K_offset. For example, the set of expected RSTD values may include a first expected RSTD value (RSTD0) that corresponds to the first offset value K0, a second expected RSTD value (RSTD1) that corresponds to the second offset value K1, and a third expected RSTD value (RSTD2) that corresponds to the third offset value K2, etc. As such, after the UE 1202 receives the set of expected RSTD values (e.g., from the network entity 1214 or a serving base station), as shown at 1208, the UE 1202 may apply the first expected RSTD value (RSTD0) for measuring PRSs transmitted from the NTN base station 1204 when the NTN base station 1204 is between the first position and the second position (or when the current K_offset value is the first offset value K0). Similarly, as shown at 1210, the UE 1202 may apply the second expected RSTD value (RSTD1) for measuring PRSs transmitted from the NTN base station 1204 when the NTN base station 1204 is between the second position and the third position (or when the current K_offset value is the second offset value K1), and as shown at 1212, the UE 1202 may apply the third expected RSTD value (RSTD2) for measuring PRSs transmitted from the NTN base station 1204 when the NTN base station 1204 is between the third position and the fourth position (or when the current K_offset value is the third offset value K2), etc. By associating expected RSTD values with the K_offset values, the UE 1202 may be able to apply or determine a more suitable expected RSTD value for communicating with the NTN base station 1204 based at least in part on the position of the NTN base station 1208 or based at least in part on the current K_offset value applied by the UE 1202.

In addition, the network entity 1214 may also associate a set of uncertainty values with the set expected RSTD values and/or with the K_offset values. For example, a first uncertainty value (UV0) may correspond to the first expected RSTD value (RSTD0) and/or the first offset value K0, a second uncertainty value (UV1) may correspond to the second expected RSTD value (RSTD1) and/or the second offset value K1, and a third uncertainty value (UV2) may correspond to the third expected RSTD value (RSTD2) and/or the third offset value K2, etc. As such, if the UE 1202 is currently applying the first offset value K0 for the K_offset and/or if the NTN base station 1204 is between the first position and the second position, the UE 1202 may use the first expected RSTD value (RSTD0) and also the first uncertainty value (UV0) for communicating with the NTN base station 1204 (e.g., for determining the measurement window for PRSs transmitted from the NTN base station 1204).

In another example, the network entity 1214 may provide the UE 1202 with one or more compensation factors, where the compensation factors may be derived based on the set of expected RSTD values and/or the K_offset values, such that the UE 1202 may apply a compensator factor when the K_offset value in which the UE 1202 is applying changes (or when the NTN base station 1204 moves to another position). Then, the UE 1202 may be configured to apply a compensator factor when the K_offset value in which the UE 1202 is applying changes (e.g., changes from K0 to K1, from K1 to K2, from K(n) to K(n+1), etc.). For example, the UE 1202 may be configured to apply a first compensation factor of 0.5 to the expected RSTD values for offset values K0 to K2 and/or a second compensation factor of 0.25 to the expected RSTD values for offset values K3 to K5. Thus, if the expected RSTD value is 400 microseconds when the K_offset value is at K0, then the expected RSTD value may be 200 microseconds when the K_offset value is at K1 (e.g., 400 x 0.5), and the expected RSTD value may be 100 microseconds when the K_offset value is at K2 (e.g., 200 x 0.5), etc. Such configuration may further reduce signaling overhead between positioning entities (e.g., the UE 1202, the NTN base station 1204 and/or the network entity 1214) as one or few compensation factors may be indicated to the UE 1202 instead of a set of expected RSTD values and/or uncertainty values.

In another example, the network entity 1214 may associate a set of expected DL-AoD values and/or DL-AoD uncertainties for PRSs transmitted from the NTN base station 1204 with the K_offset, where the set of expected DL-AoD values/uncertainties may correspond to the offset values within the K_offset. For example, the set of expected DL-AoD values/uncertainties may include a first DL-AoD value/uncertainty (DL-AoD0) that corresponds to the first offset value K0, a second DL-AoD value/uncertainty (DL-AoD1) that corresponds to the second offset value K1, and a third DL-AoD value/uncertainty (DL-AoD2) that corresponds to the third offset value K2, etc. As such, after the UE1202 receives the set of expected DL-AoD values (e.g., from the network entity 1214, the NTN base station 1204, or a serving base station), as shown at 1208, the UE 1202 may apply the first DL-AoD value/uncertainty (DL-AoD0) for PRSs transmitted from the NTN base station 1204 when the NTN base station 1204 is between the first position and the second position (or when the current K_offset value is the first offset value K0). Similarly, as shown at 1210, the UE 1202 may apply the second DL-AoD value/uncertainty (DL-AoD1) for PRSs transmitted from the NTN base station 1204 when the NTN base station 1204 is between the second position and the third position (or when the current K_offset value is the second offset value K1), and as shown at 1212, the UE 1202 may apply the third DL-AoD value/uncertainty (DL-AoD2) for PRSs transmitted from the NTN base station 1204 when the NTN base station 1204 is between the third position and the fourth position (or when the current K_offset value is the third offset value K2), etc. As the NTN base station 1204 may be moving at a high speed, the DL-AoD for PRSs transmitted at different time or position may be quite different. Thus, by associating different DL-AoD values/uncertainties with different K_offset values, the UE 1202 may be able to apply or determine a more suitable DL-AoD value/uncertainty for PRSs transmitted from the NTN base station 1204 based at least in part on the position of the NTN base station 1208 or based at least in part on the current K_offset value applied by the UE 1202. This may reduce the signaling overhead between positioning entities, and also improve the UE positioning accuracy as a more precise DL-AoD value/uncertainty may be used by the positioning entities.

In another example, the network entity 1214 may associate a set of expected AoA values and/or AoA uncertainties for PRSs transmitted from the NTN base station 1204 with the K_offset, where the set of expected AoA values and/or AoA uncertainties may correspond to the offset values within the K_offset. For example, the set of expected AoA values/uncertainties may include a first AoA value/uncertainty (AoA0) that corresponds to the first offset value K0, a second AoA value/uncertainty (AoA1) that corresponds to the second offset value K1, and a third AoA value/uncertainty (AoA2) that corresponds to the third offset value K2, etc. As such, after the UE1202 receives the set of expected AoA values/uncertainties (e.g., from the network entity 1214, the NTN base station 1204, or a serving base station), as shown at 1208, the UE 1202 may apply the first AoA value/uncertainty (AoA0) for PRSs transmitted from the NTN base station 1204 when the NTN base station 1204 is between the first position and the second position (or when the current K_offset value is the first offset value K0). Similarly, as shown at 1210, the UE 1202 may apply the second AoA value/uncertainty (AoA1) for PRSs transmitted from the NTN base station 1204 when the NTN base station 1204 is between the second position and the third position (or when the current K_offset value is the second offset value K1), and as shown at 1212, the UE 1202 may apply the third AoA value/uncertainty (AoA2) for PRSs transmitted from the NTN base station 1204 when the NTN base station 1204 is between the third position and the fourth position (or when the current K_offset value is the third offset value K2), etc. As the NTN base station 1204 may be moving at a high speed, the AoA for PRSs transmitted at different time or position may be quite different. Thus, by associating different AoA values/uncertainties with different K_offset values, the UE 1202 may be able to apply or determine a more suitable AoA value/uncertainty for PRSs transmitted from the NTN base station 1204 based at least in part on the position of the NTN base station 1208 or based at least in part on the current K_offset value applied by the UE 1202. This may reduce the signaling overhead between positioning entities, and also improve the UE positioning accuracy as a more precise AoA value may be used by the positioning entities.

A UE may receive a plurality of PRS resources from multiple TRPs via one or more PFLs, where some or all of the multiple TRPs may be NTN base stations. In some scenarios, the UE may not have capabilities to process all of the plurality of PRS resources. As such, in some examples, a network entity may configure one or more prioritization rules for the UE to prioritize measurements of PRS resources, where the prioritization rules may be based at least in part on the K_offset. Thus, based on the configured prioritization rule(s), the UE may measure a subset of a plurality of PRS resources, and the UE may skip measuring another subset of the plurality of PRS resources. In another aspect of the present disclosure, the network entity may also provide different K_offset values in different structure for each PFL/TRP/PRS resource set. The network entity may also provide different levels of association between the K_offset and the PFL(s)/TRP(s)/PRS resource set(s), such as TRP level association, or beam (PRS resource) level association, etc.

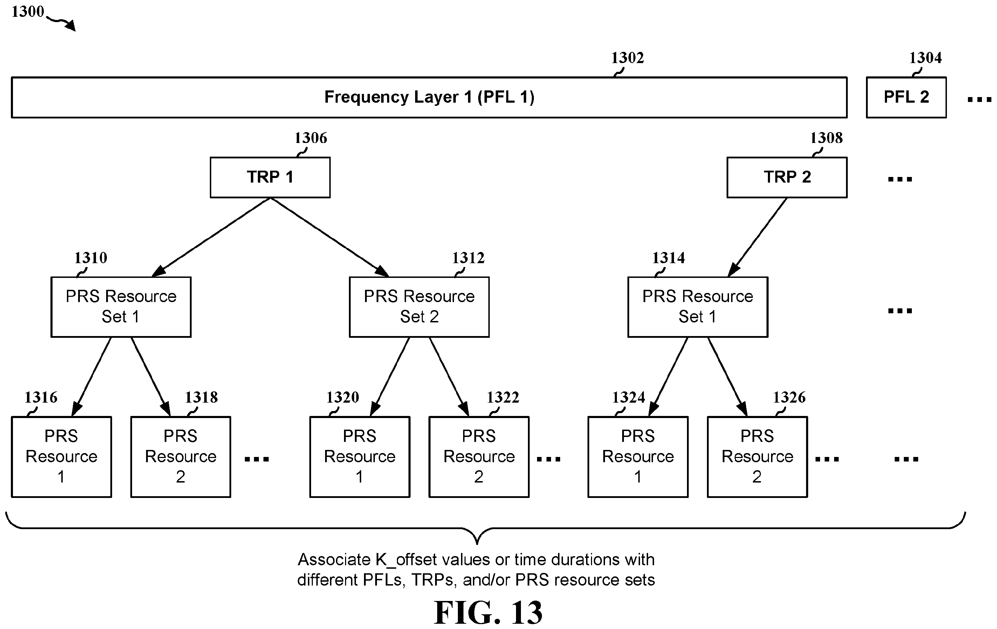

FIG. 13 is a diagram 1300 illustrating an example associating PRS resources with K_offset in accordance with various aspects of the present disclosure. A UE may be configured with a number of PRS resources in a positioning session (e.g., via assistance data). For example, as shown by the diagram 1300, the UE may be configured to receive DL PRSs from a first frequency layer 1302 (PFL 1) and a second frequency layer 1304 (PFL 2). The first frequency layer 1302 may include DL PRSs transmitted from a first TRP 1306 and a second TRP 1308, where the first TRP 1306 may transmit PRSs using a first PRS resource 1316 and a second PRS resource 1318 in a first PRS resource set 1310, and using a first PRS resource 1320 and a second PRS resource 1322 in a second PRS resource set 1312, and the second TRP 1308 may transmit PRSs using a first PRS resource 1324 and a second PRS resource 1326 in a first PRS resource set 1314. Similarly, the UE may also receive DL PRSs from the second frequency layer 1304 via multiple TRPs, PRS resource sets, and/or PRS resources.

In one aspect, as different PRS resources may be transmitted from different TRPs, the network entity may associate different K_offset values with different PRS resources, PRS resource sets, TRPs, and/or PFLs. For example, a first K_offset value or a first set of K_offset values may be associated with the first TRP 1306, and a second K_offset value or a second set of K_offset values may be associated with the second TRP 1308. Thus, if a UE is measuring PRSs transmitted from the first TRP 1306, the UE may apply the first K_offset value or the first set of K_offset values, whereas if the UE is measuring PRSs transmitted from the second TRP 1308, the UE may apply the second K_offset value or the second set of K_offset values. Similarly, in another example, a first K_offset value or a first set of K_offset values may be associated with the first PRS resource set 1310, and a second K_offset value or a second set of K_offset values may be associated with the second PRS resource set 1312. Thus, if a UE is measuring PRSs transmitted using the first PRS resource set 1310, the UE may apply the first K_offset value or the first set of K_offset values, whereas if the UE is measuring PRSs transmitted from the second PRS resource set 1312, the UE may apply the second K_offset value or the second set of K_offset values, etc.

In another example, a network entity may also configure different levels of associations for the K_offset values. For example, the network entity may apply a TRP level association, where a first K_offset value or a first set of K_offset values may apply to a first group of TRPs, and a second K_offset value or a second set of K_offset values may apply to a second group of TRPs. In another example, the network entity may apply a beam level (or a PRS resource level) association, where a first K_offset value or a first set of K_offset values may apply to a first group of beams of a TRP (or an NTN base station) or to a first group of PRS resources, and a second K_offset value or a second set of K_offset values may apply to a second group of beams of the TRP or to a second group of PRS resources.

In some scenarios, as the number of PRSs resources to be processed/measured by the UE may be beyond the processing capability of the UE, a network entity may set or configure a measurement priority for the PLF/TRP/PRS resource set based on the serving cell K_offset value. In one aspect, a network entity may provide a set of priority orders to a UE (e.g., via assistance data), and each priority order within the set may be associated with a different K_offset value. Then, a UE may be configured to select one priority order based at least in part on the current K_offset value. For example, referring back to FIG. 13, a network entity (e.g., an LMF) may associate a first priority order with a first K_offset value (K0), where the first priority order may indicate that the UE is to measure at least one PRS resource from each TRP before measuring another PRS resource from the TRP. Similarly, the network entity may associate a second priority order with a second K_offset value (K1), where the second priority order may indicate that the UE is to measure all PRS resources from the first TRP 1306 before measuring any PRS resources from the second TRP 1308. Thus, if a UE is currently applying the first K_offset value (K0), the UE may apply the first priority order for PRS measurements. For example, the UE may measure the first PRS resource 1316 from the first TRP 1306 first, and then the first PRS resource 1324 from the second TRP 1308, and so on. On the other hand, if the UE is currently applying the second K_offset value (K1), the UE may apply the second priority order for PRS measurements. For example, the UE may measure PRS resources 1316, 1318, 1320, and 1322 associated with the first TRP 1306 first, and then measure the PRS resources 1324 and 1326 associated with the second TRP 1308 afterwards (if the UE is able to process them).

A described in connection with FIG. 10, after a UE performs an initial access to a serving base station (e.g., an NTN base station) or after the UE is in a connected mode with the serving base station, the K_offset for the serving base station may be updated from time to time. Thus, in another aspect of the present disclosure, a network entity (e.g., an LMF) may also update the associated expected RSTD values, compensation factors associated with the expected RSTD values, uncertainty values associated with the expected RSTD values, expected DL-AoD values and/or DL-AoD uncertainties, and/or expected AoA values and/or AoA uncertainties associated with the K_offset for the UE from time to time or when the K_offset changes. For example, the network entity may configure the UE with a set of expected RSTD values, a set of expected DL-AoD values/uncertainties, and/or a set of expected AoA values/uncertainties that correspond to a first K_offset or a first set of K_offset values associated with an NTN base station. After a period of time or after the NTN base station or the UE moves to a different location, the first K_offset or the first set of K_offset values may no longer be applicable or suitable for the communication between the UE and the NTN base station. As such, the NTN base station may transmit a second K_offset or a second set of K_offset values to the UE for the UE to apply, which may be more suitable for the current communication between the UE and the NTN base station. In response, the network entity may also transmit another set of expected RSTD values, another set of expected DL-AoD values, and/or another set of expected AoA values that correspond to the second K_offset or the second set of K_offset values associated with the NTN base station.

In one aspect, when the K_offset is being updated between an NTN base station (e.g., the serving satellite, the neighbor satellite, etc.) and a UE, a network entity may be configured to provide a mechanism to the UE for the UE to update the expected RSTD value, the compensation factor associated with the expected RSTD value, the uncertainty values associated with the expected RSTD value, the expected DL-AoD (and/or DL-AoD uncertainties), and/or the expected AoA (and/or AoD uncertainties) such that they correspond to the updated K_offset. In one example, this may be achieved by providing an updating coefficient for each satellite/beam. For example, instead of transmitting another set of expected RSTD values, the network entity may transmit a coefficient to the UE that modifies or converts the existing expected RSTD values to another set of expected RSTD values that correspond to the updated K_offset. In some examples, the updating coefficient for each satellite or for each beam of a satellite may be based on a simple scaling, a linear model, and/or a higher order model. In another example, the mechanism to update the expected RSTD value, the compensation factor associated with the expected RSTD value, the uncertainty values associated with the expected RSTD value, the expected DL-AoD/DL-AoD uncertainties, and/or the expected AoA/AoA uncertainties may be based on an update cycle (P) associated with an NTN base station, where a UE may determine whether the expected RSTD value, the compensation factor, the uncertainty values, the expected DL-AoD/DL-AoD uncertainty, and/or the expected AoA/AoA uncertainty is to be updated based on the UE's location and/or movement and the NTN base station (satellite) ephemeris.

In another aspect, an NTN base station (e.g., the serving base station) may report to or inform a network entity (e.g., an LMF) regarding the K_offset that is currently configured or applied for the communication between the NTN base station and the UE. In another example, when a UE has determined that a new K_offset should be used for the communication with an NTN base station (e.g., the UE determines that the current K_offset is no longer applicable or suitable) or after the UE receives an updated K_offset from the NTN base station, the UE may be configured to transmit a new assistance data request to the network entity, such that the network entity may become aware that the K_offset for the communication between the UE and the NTN base station has been changed or is to be changed. For example, the new assistance data request may include the new K_offset or the updated K_offset configured for the UE (e.g., by the serving NTN base station). In another example, if an NTN base station has determined that a new K_offset or an updated K_offset is to be activated/triggered for the communication between the NTN base station and a UE, the NTN base station may inform the network entity about this change/update, such as by transmitting the new K_offset or the updated K_offset to the network entity.

In another aspect of the present disclosure, a network entity (e.g., an LMF) may be configured to associate one or more elements of assistance data with time, such that a UE communicating with an NTN base station may apply different communication parameters based at least in part on the position of the NTN base station and/or based on the time (e.g., a specified time duration. In other words, a network entity may include one or more time varying elements in assistance data, where the time varying elements may take satellite's (e.g., an NTN base station) movement into account. Thus, a UE may apply different parameters for communications between the UE and an NTN base station based on the time. As such, some elements within the assistance data may be time stamp dependent.

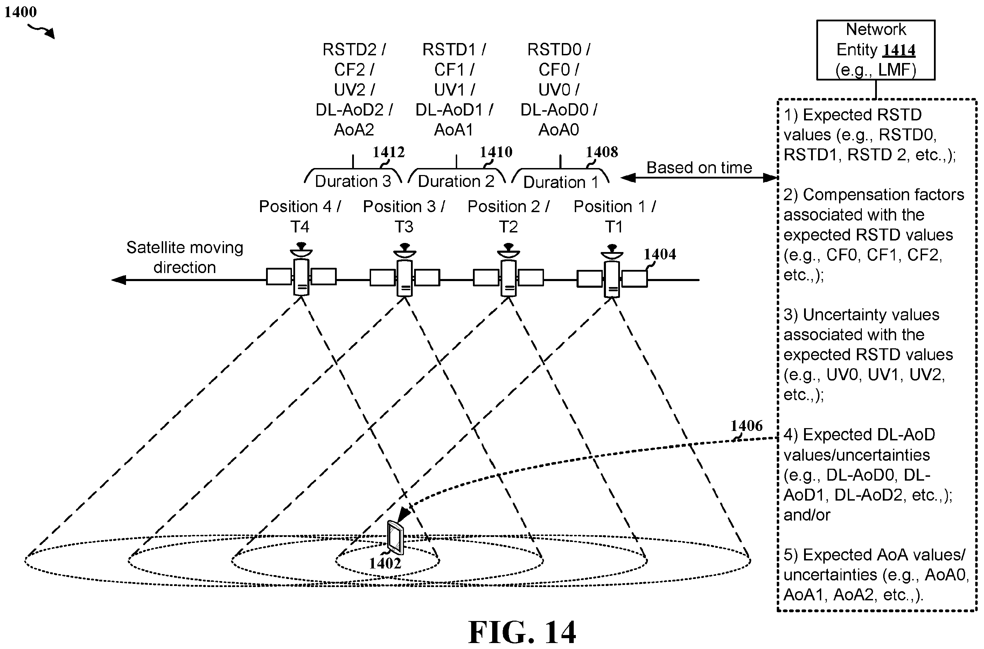

FIG. 14 is a diagram 1400 illustrating an example of associating one or more elements of assistance data with time in accordance with various aspects of the present disclosure. A UE 1402 may be communicating with an NTN base station 1404 at a first point in time (T1) and at a first position (Position 1). As shown at 1406, a network entity 1414 (e.g., an LMF) may provide the UE 1402 (e.g., via assistance data) with one or more communication related parameters, such that the UE 1402 may apply different communication parameters for communicating with the NTN base station 1404 based on the position of the NTN base station or based on a time / time duration in which the UE is in.

In one example, the network entity 1414 may associate a set of expected RSTD values for PRSs transmitted from the NTN base station 1404 with multiple time durations, where each expected RSTD value may correspond to one of the time durations. For example, the set of expected RSTD values may include a first expected RSTD value (RSTD0) that corresponds to the first time duration (Duration 1), a second expected RSTD value (RSTD1) that corresponds to the second time duration (Duration 2), and a third expected RSTD value (RSTD2) that corresponds to the third time duration (Duration 3), etc. As such, after the UE1402 receives the set of expected RSTD values (e.g., from the network entity 1414 or a serving base station), as shown at 1408, the UE 1402 may apply the first expected RSTD value (RSTD0) for measuring PRSs transmitted from the NTN base station 1404 when the UE 1402 is within the first time duration (e.g., the UE 1402 is between the first point in time (T1) and a second point in time (T2)). Similarly, as shown at 1410, the UE 1402 may apply the second expected RSTD value (RSTD1) for measuring PRSs transmitted from the NTN base station 1404 when the UE 1402 is within the second time duration (e.g., the UE 1402 is between the second point in time (T2) and a third point in time (T3)), and the UE 1402 may apply the third expected RSTD value (RSTD2) for measuring PRSs transmitted from the NTN base station 1404 when the UE 1402 is within the third time duration (e.g., the UE 1402 is between the third point in time (T3) and a fourth point in time (T4)), etc. By associating expected RSTD values with different time durations, the UE 1402 may be able to apply or determine a more suitable expected RSTD value for communicating with the NTN base station 1404 based at least in part on the position of the NTN base station 1408 (which may be known by the network entity 1414) or based at least in part on the current time in which the UE 1402 is in. In some example, the time duration indicated by the network entity 1414 may specify an actual time period (e.g., from 12:00:05 to 12:01:12, from 14:05 to 14:10, etc.). In other examples, the time duration indicated by the network entity 1414 may be based on a duration (e.g., for next 32 seconds, for next 5 minutes, etc.). In addition, the network entity 1414 may also associate a set of uncertainty values with the set expected RSTD values and/or with the different time durations. For example, a first uncertainty value (UV0) may correspond to the first expected RSTD value (RSTD0) and/or the first time duration, a second uncertainty value (UV1) may correspond to the second expected RSTD value (RSTD1) and/or the second time duration, and a third uncertainty value (UV2) may correspond to the third expected RSTD value (RSTD2) and/or the third time duration, etc. As such, if the UE 1402 is currently within the first time duration and/or if the NTN base station 1404 is between the first position (Position 1) and the second position (Position 2), the UE 1402 may use the first expected RSTD value (RSTD0) and also the first uncertainty value (UV0) for communicating with the NTN base station 1404 (e.g., for determining the measurement window for PRSs transmitted from the NTN base station 1404).

In another example, the network entity 1414 may provide the UE 1402 with one or more compensation factors, where the compensation factors may be derived based on the set of expected RSTD values for different time durations, such that the UE 1402 may apply a compensator factor to an expected RSTD value based on the time. For example, the UE 1402 may be configured to apply a first compensation factor (CF1) of 0.5 to an expected RSTD values for the first time duration and the second time duration, and apply a second compensation factor (CF2) of 0.25 for the third time duration. Thus, if the expected RSTD value is 400 microseconds when the UE is within the first time duration, then the expected RSTD value may be 200 microseconds when the UE is within the second time duration (e.g., 400 x 0.5), and the expected RSTD value may be 50 microseconds when the UE is within the third time duration (e.g., 200 x 0.25), etc. Such configuration may further reduce signaling overhead between positioning entities (e.g., the UE 1402, the NTN base station 1404 and/or the network entity 1414) as one or few compensation factors may be indicated to the UE 1402 instead of a set of expected RSTD values and/or uncertainty values.

In another example, the network entity 1414 may associate a set of expected DL-AoD values/uncertainties for PRSs transmitted from the NTN base station 1404 with different time durations. For example, the set of expected DL-AoD values/uncertainties may include a first DL-AoD value/uncertainty (DL-AoD0) that corresponds to the first time duration, a second DL-AoD value/uncertainty (DL-AoD1) that corresponds to the second time duration, and a third DL-AoD value/uncertainty (DL-AoD2) that corresponds to the third time duration, etc. As such, after the UE1402 receives the set of expected DL-AoD values/uncertainties (e.g., from the network entity 1414, the NTN base station 1404, or a serving base station), as shown at 1408, the UE 1402 may apply the first DL-AoD value/uncertainty (DL-AoD0) for PRSs transmitted from the NTN base station 1404 when the UE 1402 is within the first time duration. Similarly, as shown at 1410, the UE 1402 may apply the second DL-AoD value/uncertainty (DL-AoD1) for PRSs transmitted from the NTN base station 1404 when the UE 1402 is within the second time duration, and as shown at 1412, the UE 1402 may apply the third DL-AoD value/uncertainty (DL-AoD2) for PRSs transmitted from the NTN base station 1404 when the UE 1402 is within the third time duration, etc. As the NTN base station 1404 may be moving at a high speed, the DL-AoD for PRSs transmitted at different time or position may be quite different. Thus, by associating different DL-AoD values/uncertainties with different time durations, the UE 1402 may be able to apply or determine a more suitable DL-AoD value/uncertainty for PRSs transmitted from the NTN base station 1404 based at least in part on the position of the NTN base station 1408 or based at least in part on the current time. This may reduce the signaling overhead between positioning entities, and also improve the UE positioning accuracy as a more precise DL-AoD value/uncertainty may be used by the positioning entities.

In another example, the network entity 1414 may associate a set of expected AoA values/uncertainties for PRSs transmitted from the NTN base station 1404 with different time durations. For example, the set of expected AoA values/uncertainties may include a first AoA value/uncertainty (AoA0) that corresponds to the first time duration, a second AoA value/uncertainty (AoA1) that corresponds to the second time duration, and a third AoA value/uncertainty (AoA2) that corresponds to the third time duration, etc. As such, after the UE1402 receives the set of expected AoA values/uncertainties (e.g., from the network entity 1414, the NTN base station 1404, or a serving base station), as shown at 1408, the UE 1402 may apply the first AoA value/uncertainty (AoA0) for PRSs transmitted from the NTN base station 1404 when the UE 1402 is within the first time duration. Similarly, as shown at 1410, the UE 1402 may apply the second AoA value/uncertainty (AoA1) for PRSs transmitted from the NTN base station 1404 when the UE 1402 is within the second time duration, and as shown at 1412, the UE 1402 may apply the third AoA value/uncertainty (AoA2) for PRSs transmitted from the NTN base station 1404 when the UE 1402 is within the third time duration, etc. As the NTN base station 1404 may be moving at a high speed, the AoA for PRSs transmitted at different time or position may be quite different. Thus, by associating different AoA values/uncertainties with different time durations, the UE 1402 may be able to apply or determine a more suitable AoA value/uncertainty for PRSs transmitted from the NTN base station 1404 based at least in part on the position of the NTN base station 1408 or based at least in part on the current time. This may reduce the signaling overhead between positioning entities, and also improve the UE positioning accuracy as a more precise AoA value/uncertainty may be used by the positioning entities.

In another example, as described in connection with FIG. 13, a UE may receive a plurality of PRS resources from multiple TRPs via one or more PFLs, where some or all of the multiple TRPs may be NTN base stations. In some scenarios, the UE may not have capabilities to process all of the plurality of PRS resources. As such, in some examples, a network entity may configure one or more prioritization rules for the UE to prioritize measurements of PRS resources, where the prioritization rules may be based at least in part on time. Thus, based on the configured prioritization rule(s), the UE may measure a subset of a plurality of PRS resources, and the UE may skip measuring another subset of the plurality of PRS resources.

In one aspect, as different PRS resources may be transmitted from different TRPs, the network entity may associate different time durations with different PRS resources, PRS resource sets, TRPs, and/or PFLs. For example, referring back to FIG. 13, a first time duration (e.g., Duration 1 or from T1 to T2) may be associated with the first TRP 1306, and a second time duration may be associated with the second TRP 1308. Thus, if a UE is within the first time duration, the UE measure PRSs transmitted from the first TRP 1306, whereas if the UE is within the second time duration, the UE may measure PRSs transmitted from the second TRP 1308. Similarly, in another example, the first time duration may be associated with the first PRS resource set 1310, and the second time duration may be associated with the second PRS resource set 1312. Thus, if a UE is within the first time duration, the UE may measure PRSs transmitted using the first PRS resource set 1310, whereas if the UE is within the second time duration, the UE may measure PRSs transmitted from the second PRS resource set 1312, etc.

In some scenarios, as the number of PRSs resources to be processed/measured by the UE may be beyond the processing capability of the UE, a network entity may set or configure a measurement priority for the PLF/TRP/PRS resource set based on time durations. In one aspect, a network entity may provide a set of priority orders to a UE (e.g., via assistance data), and each priority order within the set may be associated with a time duration. Then, a UE may be configured to select one priority order based at least in part on the time. For example, referring back to FIG. 13, a network entity may associate a first priority order with a first time duration (Duration 1), where the first priority order may indicate that the UE is to measure at least one PRS resource from each TRP before measuring another PRS resource from the TRP. Similarly, the network entity may associate a second priority order with a second time duration (Duration 2), where the second priority order may indicate that the UE is to measure all PRS resources from the first TRP 1306 before measuring any PRS resources from the second TRP 1308. Thus, if a UE is within the first time duration, the UE may apply the first priority order for PRS measurements. For example, the UE may measure the first PRS resource 1316 from the first TRP 1306 first, and then the first PRS resource 1324 from the second TRP 1308, and so on. On the other hand, if the UE is within the second time duration, the UE may apply the second priority order for PRS measurements. For example, the UE may measure PRS resources 1316, 1318, 1320, and 1322 associated with the first TRP 1306 first, and then measure the PRS resources 1324 and 1326 associated with the second TRP 1308 afterwards (if the UE is able to process them).

In another example, a network entity (e.g., an LMF) may provide a list of expected RSTD values, uncertainty values associated with the expected RSTD values, expected DL-AoD values/DL-AoD uncertainties, and/or expected AoA values/AoA uncertainties for each PFL, TRP, and/or PRS resource set, such that a UE may apply the list of expected RSTD values, uncertainty values associated with the expected RSTD values, expected DL-AoD values/uncertainties, and/or expected AoA values/uncertainties based on the PFL, TRP and/or PRS resource set configured for the UE. The network entity may use an existing expected RSTD structure to provide multiple values, such as described in connection with FIGs. 12 and 14. For example, referring back to FIG. 13, a network entity may associate a first list of expected RSTD values/uncertainties, expected DL-AoD values/uncertainties, and expected AoA values/uncertainties with the first TRP 1306 and associate a second list of expected RSTD values/uncertainties, expected DL-AoD values/uncertainties, and expected AoA values/uncertainties with the second TRP 1308. Then, if a UE is configured to measure PRS resources from the first TRP 1306, the UE may apply the first list of expected RSTD values/uncertainties, expected DL-AoD values/uncertainties, and expected AoA values/uncertainties. For example, the UE may select one of the expected RSTD/DL-AoD/AoA values/uncertainties based on the K_offset or based on a time duration. Similarly, if the UE is configured to measure PRS resources from the second TRP 1308, the UE may apply the second list of expected RSTD values/uncertainties, expected DL-AoD values/uncertainties, and expected AoA values/uncertainties.

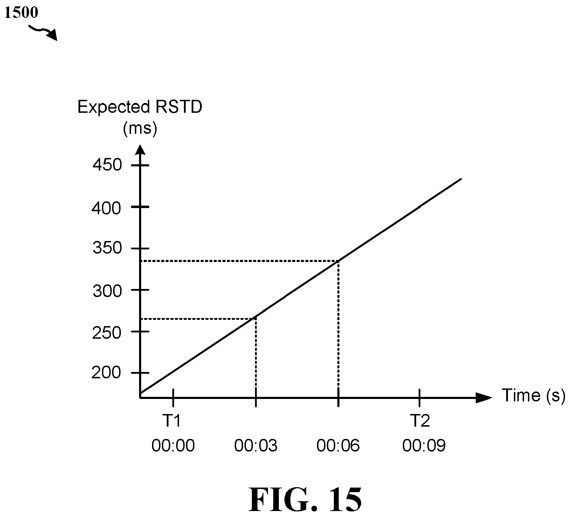

In another aspect of the present disclosure, instead of configuring a UE to apply different parameters for different time durations, such as applying a first set of parameters during a first time duration and applying a second set of parameters during a second time duration, the UE may be configure to apply a gradually changing parameters within a time period. In other words, pathloss based parameterization and/or formula based parametrization expected RSTD values, uncertainties associated with the expected RSTD values, expected AoA/AoA uncertainties, expected DL-AOD/DL-AoD uncertainties, and/or other positioning associated parameters, etc., may be applied to the UE. For example, as shown by a diagram 1500 of FIG. 15, a UE may be configured to apply an expected RSTD of 200 microseconds at a first point in time (T1) and apply an expected RSTD of 400 microseconds at a second point in time (T2). Then, the UE may apply a gradually changing expected RSTD values (e.g., changing from 200 to 400 microseconds) between the first point in time and the second point in time. For example, if the first point in time is at 00:00 and the second point in time is at 00:09, at 00:03, the UE may apply an expected RSTD value of approximate 265 microseconds, and at 00:06, the UE may apply an expected RSTD value of approximately 335 microseconds, etc. As such, the UE may dynamically change the positioning associated parameters (e.g., information elements of assistance data) based on a proposed model, which may greatly reduce signaling overhead between different positioning entities.

In another aspect of the present disclosure, a network entity (e.g., an LMF) may provide a UE with a time varying profile of line-of-sight (LOS) and/or non-line-of-sight (NLOS) indicators associated with an NTN base station when the UE is communicating with the NTN base station, where the time varying profile may estimate and indicate to the UE whether the communication between the UE and the NTN base station is going to be LOS or NLOS at different time durations. The LOS or NLOS estimation may be based on the previous estimate of the UE positioning and the current UE movement. Based on whether the communication between the UE and the NTN base station based on LOS condition or NLOS condition, the UE may apply different parameters and/or algorithms. For example, a UE may be configured to apply an advanced earliest arrival path algorithm for PRSs received from an NTN base station in a time duration that is estimated to be NLOS, and the UE may be configured not to apply the advanced earliest arrival path algorithm for PRSs received from an NTN base station in a time duration that is estimated to be LOS. Thus, based on whether the communication is LOS or NLOS in a time duration, a UE may enable and disable different algorithms.

In another aspect of the present disclosure, a network entity (e.g., an LMF) may provide a UE with a validity timer / timestamp for reference cell measurement (e.g., for a positioning session), such that the UE may determine whether to choose a cell to be a reference cell based on the time. For example, each reference cell (e.g., for the expected RSTD) in assistance data may be associated with a validity timer or duration, and the validity timer or duration may indicate a time in which an associated reference cell is valid for PRS measurement. For example, the network entity may indicate that a first reference cell is valid for PRS measurement between 11:00:00 and 11:07:00 or for next 7 minutes, and a second reference cell is valid for PRS measurement between 11:07:00 and 11:15:00 or for 8 minutes after 7 minutes, etc. Thus, based on the time, the UE may know which reference cells are valid for PRS measurement. Such configuration may enable a network entity to recommend a list of NTN base stations to a UE that are more suitable for PRS measurements in a UE positioning session. In other words, the network entity may provide the information about the multiple reference cells with time stamps, where some reference cells may be activated in the present and some reference cells may be activated in the future.

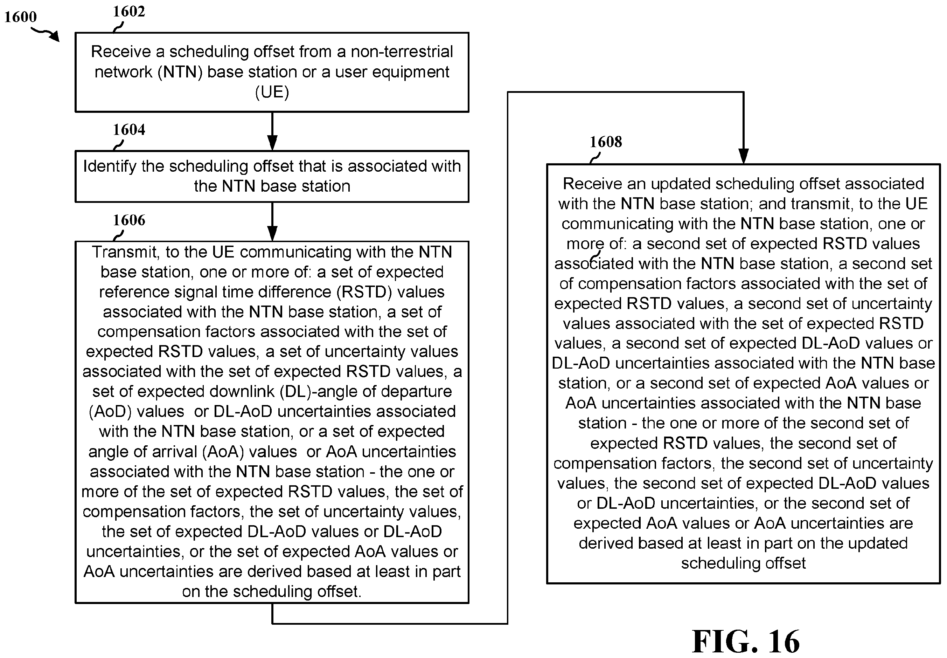

FIG. 16 is a flowchart 1600 of a method of wireless communication. The method may be performed by a network entity or a component of a network entity (e.g., the LMF 185, 706; the network entity 1214, 1414; the apparatus 1802). The method may enable the network entity to configure a UE with various parameters associated with an NTN base station, such that the UE may apply different parameters when the NTN base station is at a different position or at a different time. At least some of the configured parameters may be associated with a scheduling offset (K_offset) of the NTN base station.

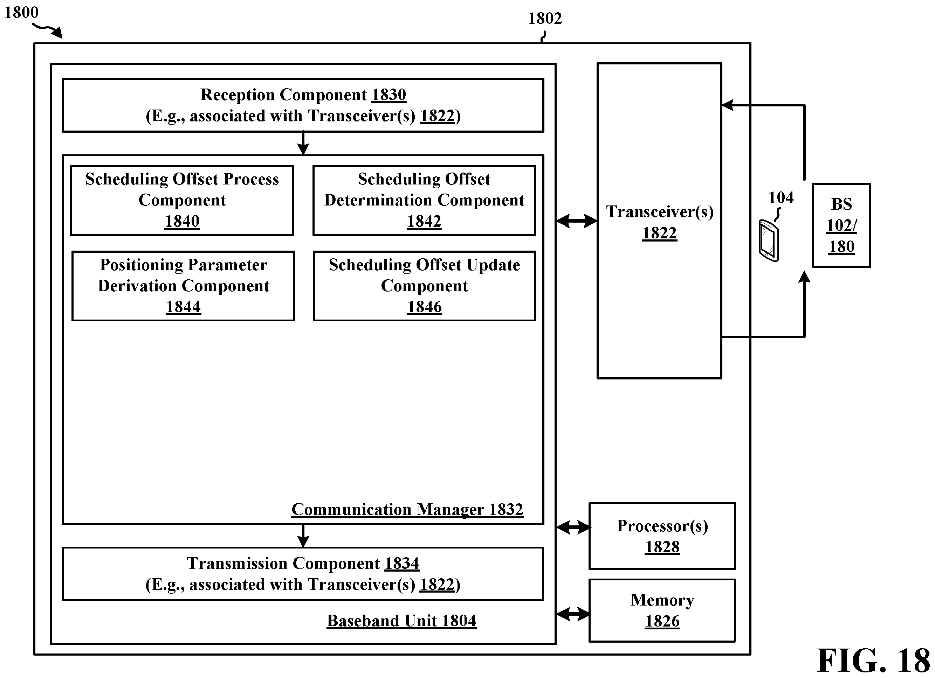

At 1602, the network entity may receive the scheduling offset from an NTN base station or a UE, such as described in connection with FIGs. 10 and 12. For example, referring to FIG. 12, the network entity 1214 may receive a scheduling offset associated with the communication between the NTN base station 1204 and the UE 1202 from the NTN base station 1204 and/or the UE 1202. The reception of the scheduling offset may be performed by, e.g., the scheduling offset process component 1840 and/or the reception component 1830 of the apparatus 1802 in FIG. 18. The NTN base station may be a serving base station, a neighbor base station, or a TRP.

At 1604, the network entity may identify (or determine) a scheduling offset that is associated with an NTN base station, such as described in connection with FIGs. 10 and 12. For example, referring to FIG. 12, the network entity 1214 may identify a scheduling offset associated with the communication between the NTN base station 1204 and the UE 1202. The identification of the scheduling offset may be performed by, e.g., the scheduling offset determination component 1842 of the apparatus 1802 in FIG. 18.

At 1606, the network entity may transmit, to a UE communicating with the NTN base station, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties may be derived based at least in part on the scheduling offset, such as described in connection with FIG. 12. For example, at 1206, the network entity 1214 may transmit, to the UE 1202, a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, and/or a set of expected AoA values or AoA uncertainties associated with the NTN base station, where some of the transmitted parameters may be derived based at least in part on the scheduling offset. The transmission of the expected RSTD values, the compensation factors, the uncertainty values, the DL-AoD values or DL-AoD uncertainties, and/or the expected AoA values or AoA uncertainties may be performed by, e.g., the positioning parameter derivation component 1844 and/or the transmission component 1834 of the apparatus 1802 in FIG. 18. The one or more of the set of expected RSTD values, the set of compensation factors, the set of uncertainty values, the set of expected DL-AoD values or DL-AoD uncertainties, or the set of expected AoA values or AoA uncertainties may be transmitted via AD.

In one example, the scheduling offset may include multiple offset values, the scheduling offset may be at least one of a timing offset, a K_offset, a Koffset, or a K offset. In such an example, each of the multiple offset values may correspond to an expected RSTD value within the set of expected RSTD values, each of the multiple offset values may correspond to an uncertainty value within the set of uncertainty values, each of the multiple offset values may correspond to an expected DL-AoD value or DL-AoD uncertainty within the set of expected DL-AoD values or DL-AoD uncertainties, and/or each of the multiple offset values may correspond to an expected AoA value or AoA uncertainty within the set of expected AoA values or AoA uncertainties.

In another example, the scheduling offset may be associated with at least one PFL, at least one TRP, or at least one PRS resource set, such as described in connection with FIG. 13. In such an example, the network entity may configure the UE to prioritize measurements for the at least one PFL, the at least one TRP, or the at least one PRS resource set based on the scheduling offset.

In another example, the network entity may associate the scheduling offset with the one or more of the set of expected RSTD values, the set of compensation factors, the set of uncertainty values, the set of expected DL-AoD values or DL-AoD uncertainties, or the set of expected AoA values or AoA uncertainties, and the network entity may apply the association to multiple TRPs, multiple beams of a TRP, or multiple PRS resource sets.

In another example, the set of expected RSTD values, the set of compensation factors, the set of uncertainty values, the set of expected DL-AoD values or DL-AoD uncertainties, or the set of expected AoA values or AoA uncertainties may be derived from the scheduling offset based on simple scaling, a linear model, a higher order model, or an update cycle.

In another example, the network entity may transmit, to the UE, a mechanism to derive the set of expected RSTD values, the set of compensation factors, the set of uncertainty values, the set of expected DL-AoD values or DL-AoD uncertainties, or the set of expected AoA values or AoA uncertainties from the scheduling offset based on simple scaling, a linear model, a higher order model, or an update cycle.

At 1608, the network entity may receive an updated scheduling offset associated with the NTN base station, and the network entity may transmit, to the UE communicating with the NTN base station, one or more of: a second set of expected RSTD values associated with the NTN base station, a second set of compensation factors associated with the set of expected RSTD values, a second set of uncertainty values associated with the set of expected RSTD values, a second set of expected DL-AoD values or DL-AoD uncertainties associated with the NTN base station, or a second set of expected AoA values or AoA uncertainties associated with the NTN base station, where the one or more of the second set of expected RSTD values, the second set of compensation factors, the second set of uncertainty values, the second set of expected DL-AoD values or DL-AoD uncertainties, or the second set of expected AoA values or AoA uncertainties are derived based at least in part on the updated scheduling offset, such as described in connection with FIG. 12. For example, after the K_offset is updated (or changed), the network entity 1214 may transmit, to the UE 1202, another set of expected RSTD values associated with the NTN base station, another set of compensation factors associated with the set of expected RSTD values, another set of uncertainty values associated with the set of expected RSTD values, another set of expected DL-AoD values or DL-AoD uncertainties associated with the NTN base station, and/or another set of expected AoA values or AoA uncertainties associated with the NTN base station, where some of the transmitted parameters may be derived based at least in part on the updated scheduling offset. The reception of the scheduling offset may be performed by, e.g., the scheduling offset process component 1840 and/or the reception component 1830 of the apparatus 1802 in FIG. 18. The transmission of the updated expected RSTD values, the updated compensation factors, the updated uncertainty values, the updated DL-AoD values or DL-AoD uncertainties, and/or the updated expected AoA values or AoA uncertainties may be performed by, e.g., the positioning parameter derivation component 1844 and/or the transmission component 1834 of the apparatus 1802 in FIG. 18.

In one example, the network entity may receive, from the UE, a request for new AD based on the updated scheduling offset being specified. In such an example, the request for the new AD may include the updated scheduling offset.

In another example, the network entity may receive, from the NTN base station or a serving base station, an indication to activate the updated scheduling offset for the UE to communicate with the NTN base station.

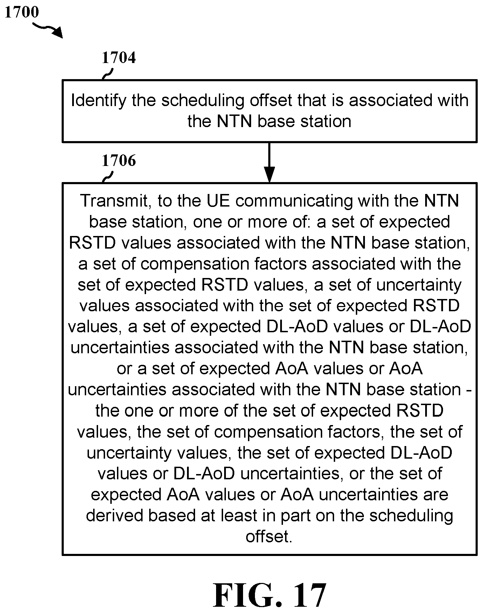

FIG. 17 is a flowchart 1700 of a method of wireless communication. The method may be performed by a network entity or a component of a network entity (e.g., the LMF 185, 706; the network entity 1214, 1414; the apparatus 1802). The method may enable the network entity to configure a UE with various parameters associated with an NTN base station, such that the UE may apply different parameters when the NTN base station is at a different position or at a different time. At least some of the configured parameters may be associated with a scheduling offset (K_offset) of the NTN base station.

At 1704, the network entity may identify (or determine) a scheduling offset that is associated with an NTN base station, such as described in connection with FIGs. 10 and 12. For example, referring to FIG. 12, the network entity 1214 may identify a scheduling offset associated with the communication between the NTN base station 1204 and the UE 1202. The identification of the scheduling offset may be performed by, e.g., the scheduling offset determination component 1842 of the apparatus 1802 in FIG. 18.

In one example, the network entity may receive the scheduling offset from an NTN base station or a UE, such as described in connection with FIGs. 10 and 12. For example, referring to FIG. 12, the network entity 1214 may receive a scheduling offset associated with the communication between the NTN base station 1204 and the UE 1202 from the NTN base station 1204 and/or the UE 1202. The reception of the scheduling offset may be performed by, e.g., the scheduling offset process component 1840 and/or the reception component 1830 of the apparatus 1802 in FIG. 18. The NTN base station may be a serving base station, a neighbor base station, or a TRP.

At 1706, the network entity may transmit, to a UE communicating with the NTN base station, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties may be derived based at least in part on the scheduling offset, such as described in connection with FIG. 12. For example, at 1206, the network entity 1214 may transmit, to the UE 1202, a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, and/or a set of expected AoA values or AoA uncertainties associated with the NTN base station, where some of the transmitted parameters may be derived based at least in part on the scheduling offset. The transmission of the expected RSTD values, the compensation factors, the uncertainty values, the DL-AoD values or DL-AoD uncertainties, and/or the expected AoA values or AoA uncertainties may be performed by, e.g., the positioning parameter derivation component 1844 and/or the transmission component 1834 of the apparatus 1802 in FIG. 18. The one or more of the set of expected RSTD values, the set of compensation factors, the set of uncertainty values, the set of expected DL-AoD values or DL-AoD uncertainties, or the set of expected AoA values or AoA uncertainties may be transmitted via AD.

In one example, the scheduling offset may include multiple offset values, the scheduling offset may be at least one of a timing offset, a K_offset, a Koffset, or a K offset. In such an example, each of the multiple offset values may correspond to an expected RSTD value within the set of expected RSTD values, each of the multiple offset values may correspond to an uncertainty value within the set of uncertainty values, each of the multiple offset values may correspond to an expected DL-AoD value or DL-AoD uncertainty within the set of expected DL-AoD values or DL-AoD uncertainties, and/or each of the multiple offset values may correspond to an expected AoA value or AoA uncertainty within the set of expected AoA values or AoA uncertainties.

In another example, the scheduling offset may be associated with at least one PFL, at least one TRP, or at least one PRS resource set, such as described in connection with FIG. 13. In such an example, the network entity may configure the UE to prioritize measurements for the at least one PFL, the at least one TRP, or the at least one PRS resource set based on the scheduling offset.

In another example, the network entity may associate the scheduling offset with the one or more of the set of expected RSTD values, the set of compensation factors, the set of uncertainty values, the set of expected DL-AoD values or DL-AoD uncertainties, or the set of expected AoA values or AoA uncertainties, and the network entity may apply the association to multiple TRPs, multiple beams of a TRP, or multiple PRS resource sets.

In another example, the set of expected RSTD values, the set of compensation factors, the set of uncertainty values, the set of expected DL-AoD values or DL-AoD uncertainties, or the set of expected AoA values or AoA uncertainties may be derived from the scheduling offset based on simple scaling, a linear model, a higher order model, or an update cycle.

In another example, the network entity may transmit, to the UE, a mechanism to derive the set of expected RSTD values, the set of compensation factors, the set of uncertainty values, the set of expected DL-AoD values or DL-AoD uncertainties, or the set of expected AoA values or AoA uncertainties from the scheduling offset based on simple scaling, a linear model, a higher order model, or an update cycle.

In another example, the network entity may receive an updated scheduling offset associated with the NTN base station, and the network entity may transmit, to the UE communicating with the NTN base station, one or more of: a second set of expected RSTD values associated with the NTN base station, a second set of compensation factors associated with the set of expected RSTD values, a second set of uncertainty values associated with the set of expected RSTD values, a second set of expected DL-AoD values or DL-AoD uncertainties associated with the NTN base station, or a second set of expected AoA values or AoA uncertainties associated with the NTN base station, where the one or more of the second set of expected RSTD values, the second set of compensation factors, the second set of uncertainty values, the second set of expected DL-AoD values or DL-AoD uncertainties, or the second set of expected AoA values or AoA uncertainties are derived based at least in part on the updated scheduling offset, such as described in connection with FIG. 12. For example, after the K_offset is updated (or changed), the network entity 1214 may transmit, to the UE 1202, another set of expected RSTD values associated with the NTN base station, another set of compensation factors associated with the set of expected RSTD values, another set of uncertainty values associated with the set of expected RSTD values, another set of expected DL-AoD values or DL-AoD uncertainties associated with the NTN base station, and/or another set of expected AoA values or AoA uncertainties associated with the NTN base station, where some of the transmitted parameters may be derived based at least in part on the updated scheduling offset. The reception of the scheduling offset may be performed by, e.g., the scheduling offset process component 1840 and/or the reception component 1830 of the apparatus 1802 in FIG. 18. The transmission of the updated expected RSTD values, the updated compensation factors, the updated uncertainty values, the updated DL-AoD values or DL-AoD uncertainties, and/or the updated expected AoA values or AoA uncertainties may be performed by, e.g., the positioning parameter derivation component 1844 and/or the transmission component 1834 of the apparatus 1802 in FIG. 18.

In another example, the network entity may receive, from the UE, a request for new AD based on the updated scheduling offset being specified. In such an example, the request for the new AD may include the updated scheduling offset.

In another example, the network entity may receive, from the NTN base station or a serving base station, an indication to activate the updated scheduling offset for the UE to communicate with the NTN base station.

FIG. 18 is a diagram 1800 illustrating an example of a hardware implementation for an apparatus 1802. The apparatus 1802 may be a location management function or a network entity, a component of a location management function or a network entity, or may implement location management function/network entity functionality. In some aspects, the apparatus 1802 may include a baseband unit 1804. The baseband unit 1804 may communicate through at least one transceiver 1822 (e.g., one or more RF transceivers and/or antennas) with the UE 104 and/or the base station 102/180. The at least one transceiver 1822 may be associated with or include a reception component 1830 and/or a transmission component 1834. The baseband unit 1804 may include a computer-readable medium / memory (e.g., a memory 1826). The baseband unit 1804 and/or the at least one processor 1828 may be responsible for general processing, including the execution of software stored on the computer-readable medium / memory. The software, when executed by the baseband unit 1804 and/or the at least one processor 1828, causes the baseband unit 1804 and/or the at least one processor 1828 to perform the various functions described *supra.* The computer-readable medium / memory may also be used for storing data that is manipulated by the baseband unit 1804 when executing software. The baseband unit 1804 further includes the reception component 1830, a communication manager 1832, and the transmission component 1834. The reception component 1830 and the transmission component 1834 may, in a non-limiting example, include at least one transceiver and/or at least one antenna subsystem. The communication manager 1832 includes the one or more illustrated components. The components within the communication manager 1832 may be stored in the computer-readable medium / memory and/or configured as hardware within the baseband unit 1804. The baseband unit 1804 may be a component of the base station 310 and may include the memory 376 and/or at least one of the TX processor 316, the RX processor 370, and the controller/processor 375.

The communication manager 1832 includes a scheduling offset process component 1840 that is configured to receive the scheduling offset from the NTN base station or the UE, e.g., as described in connection with 1602 of FIG. 16. The communication manager 1832 further includes a scheduling offset determination component 1842 that is configured to identify a scheduling offset that is associated with an NTN base station, e.g., as described in connection with 1604 of FIG. 16 and/or 1704 of FIG. 17. The communication manager 1832 further includes a positioning parameter derivation component 1844 that is configured to transmit, to a UE communicating with the NTN base station, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset, e.g., as described in connection with 1606 of FIG. 16 and/or 1706 of FIG. 17. The communication manager 1832 further includes a scheduling offset update component 1846 that is configured to receive an updated scheduling offset associated with the NTN base station; and transmit, to the UE communicating with the NTN base station, one or more of: a second set of expected RSTD values associated with the NTN base station, a second set of compensation factors associated with the set of expected RSTD values, a second set of uncertainty values associated with the set of expected RSTD values, a second set of expected DL-AoD values or DL-AoD uncertainties associated with the NTN base station, or a second set of expected AoA values or AoA uncertainties associated with the NTN base station, where the one or more of the second set of expected RSTD values, the second set of compensation factors, the second set of uncertainty values, the second set of expected DL-AoD values or DL-AoD uncertainties, or the second set of expected AoA values or AoA uncertainties are derived based at least in part on the updated scheduling offset, e.g., as described in connection with 1680 of FIG. 16.

The apparatus may include additional components that perform each of the blocks of the algorithm in the flowcharts of FIGs. 16 and 17. As such, each block in the flowcharts of FIGs. 16 and 17 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1802 may include a variety of components configured for various functions. In one configuration, the apparatus 1802, and in particular the baseband unit 1804, includes means for receiving the scheduling offset from the NTN base station or the UE (e.g., the scheduling offset process component 1840 and/or the reception component 1830). The apparatus 1802 includes means for identifying a scheduling offset that is associated with an NTN base station (e.g., the scheduling offset determination component 1842). The apparatus 1802 includes means for transmitting, to a UE communicating with the NTN base station, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset (e.g., the positioning parameter derivation component 1844 and/or the transmission component 1834). The apparatus 1802 includes means for receiving an updated scheduling offset associated with the NTN base station; and means for transmitting, to the UE communicating with the NTN base station, one or more of: a second set of expected RSTD values associated with the NTN base station, a second set of compensation factors associated with the set of expected RSTD values, a second set of uncertainty values associated with the set of expected RSTD values, a second set of expected DL-AoD values or DL-AoD uncertainties associated with the NTN base station, or a second set of expected AoA values or AoA uncertainties associated with the NTN base station, where the one or more of the second set of expected RSTD values, the second set of compensation factors, the second set of uncertainty values, the second set of expected DL-AoD values or DL-AoD uncertainties, or the second set of expected AoA values or AoA uncertainties are derived based at least in part on the updated scheduling offset (e.g., the scheduling offset update component 1846 and/or the reception component 1830).

In one configuration, the NTN base station may be a serving base station, a neighbor base station, or a TRP.

In another configuration, the scheduling offset may include multiple offset values, the scheduling offset may be at least one of a timing offset, a K_offset, a Koffset, or a K offset. In such a configuration, each of the multiple offset values may correspond to an expected RSTD value within the set of expected RSTD values, each of the multiple offset values may correspond to an uncertainty value within the set of uncertainty values, each of the multiple offset values may correspond to an expected DL-AoD value or DL-AoD uncertainty within the set of expected DL-AoD values or DL-AoD uncertainties, and/or each of the multiple offset values may correspond to an expected AoA value or AoA uncertainty within the set of expected AoA values or AoA uncertainties.

In another configuration, the scheduling offset may be associated with at least one PFL, at least one TRP, or at least one PRS resource set, such as described in connection with FIG. 13. In such a configuration, the apparatus 1802 includes means for configuring the UE to prioritize measurements for the at least one PFL, the at least one TRP, or the at least one PRS resource set based on the scheduling offset.

In another configuration, the apparatus 1802 includes means for associating the scheduling offset with the one or more of the set of expected RSTD values, the set of compensation factors, the set of uncertainty values, the set of expected DL-AoD values or DL-AoD uncertainties, or the set of expected AoA values or AoA uncertainties, and means for applying the association to multiple TRPs, multiple beams of a TRP, or multiple PRS resource sets.

In another configuration, the set of expected RSTD values, the set of compensation factors, the set of uncertainty values, the set of expected DL-AoD values or DL-AoD uncertainties, or the set of expected AoA values or AoA uncertainties may be derived from the scheduling offset based on simple scaling, a linear model, a higher order model, or an update cycle.

In another configuration, the apparatus 1802 includes means for transmitting, to the UE, a mechanism to derive the set of expected RSTD values, the set of compensation factors, the set of uncertainty values, the set of expected DL-AoD values or DL-AoD uncertainties, or the set of expected AoA values or AoA uncertainties from the scheduling offset based on simple scaling, a linear model, a higher order model, or an update cycle.

In another configuration, the apparatus 1802 includes means for receiving, from the UE, a request for new AD based on the updated scheduling offset being specified. In such a configuration, the request for the new AD may include the updated scheduling offset.

In another configuration, the apparatus 1802 includes means for receiving, from the NTN base station or a serving base station, an indication to activate the updated scheduling offset for the UE to communicate with the NTN base station.

The means may be one or more of the components of the apparatus 1802 configured to perform the functions recited by the means. As described supra, the apparatus 1802 may include the TX Processor 316, the RX Processor 370, and the controller/processor 375. As such, in one configuration, the means may be the TX Processor 316, the RX Processor 370, and the controller/processor 375 configured to perform the functions recited by the means.

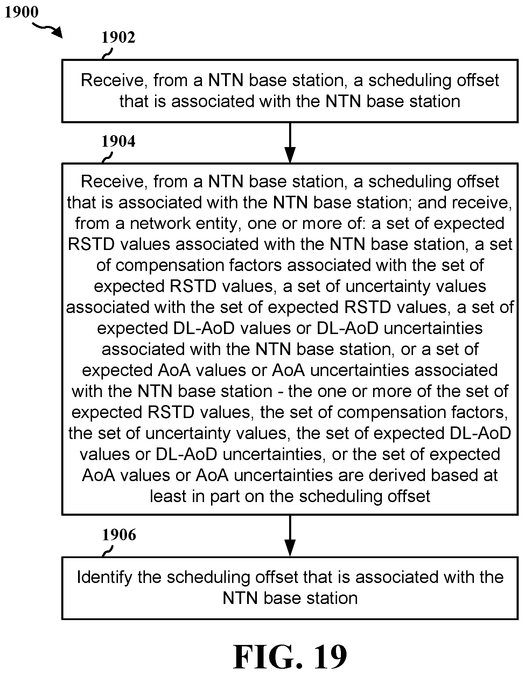

FIG. 19 is a flowchart 1900 of a method of wireless communication. The method may be performed by a UE or a component of a UE (e.g., the UE 104, 350, 404, 602, 702, 810, 902, 1002, 1102, 1202, 1402; the apparatus 2102; a processing system, which may include the memory 360 and which may be the entire UE 350 or a component of the UE 350, such as the TX processor 368, the RX processor 356, and/or the controller/processor 359). The method may enable the UE to apply different communication parameters when communicating with an NTN base station based at least in part on the NTN base station's position, the time, and/or a scheduling offset (K_offset) associated with communications between the UE and the NTN base station.

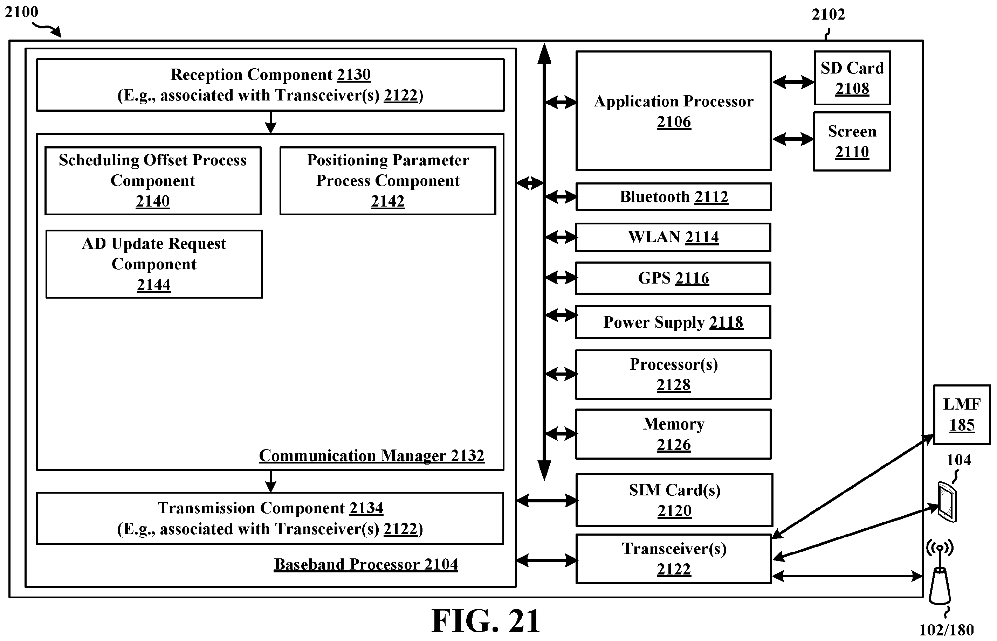

At 1902, the UE may receive, from an NTN base station, a scheduling offset that is associated with the NTN base station, such as described in connection with FIGs. 10 and 12. For example, at 1006 of FIG. 10, at 1210, the UE 1202 may receive a value list of K_offset from the NTN base station 1204. The reception of the scheduling offset may be performed by, e.g., the scheduling offset process component 2140 and/or the reception component 2130 of the apparatus 2102 in FIG. 21.

At 1904, the UE may receive, from a network entity, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset, such as described in connection with FIG. 12. For example, at 1206, the UE 1202 may receive, from the network entity 1214, a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, and/or a set of expected AoA values or AoA uncertainties associated with the NTN base station, where some of the transmitted parameters may be derived based at least in part on the scheduling offset. The reception of the expected RSTD values, the compensation factors, the uncertainty values, the DL-AoD values or DL-AoD uncertainties, and/or the expected AoA values or AoA uncertainties may be performed by, e.g., the propagation delay calculation component 2142 of the apparatus 2102 in FIG. 21.

In one example, the one or more of the set of expected RSTD values, the set of compensation factors, the set of uncertainty values, the set of expected DL-AoD values or DL-AoD uncertainties, or the set of expected AoA values or AoA uncertainties may be received via an AD.

In another example, the scheduling offset may include multiple offset values, the scheduling offset being at least one of a timing offset, a K_offset, a Koffset, or a K offset. In such an example, the UE may select an expected RSTD value from the set of expected RSTD values based on a current offset value of the multiple offset values, select an uncertainty value from the set of uncertainty values based on a current offset value of the multiple offset values, select an expected DL-AoD value or DL-AoD uncertainty from the set of expected DL-AoD values or DL-AoD uncertainties based on a current offset value of the multiple offset values, and/or select an expected AoA value or AoA uncertainty from the set of expected AoA values or AoA uncertainties based on a current offset value of the multiple offset values.

At 1906, the UE may transmit, to the network entity, a request for new AD based on an updated scheduling offset is specified, such as described in connection with FIG. 12. For example, the UE 1202 may transmit, to the network entity 1214, a request for new AD based on the scheduling offset being updated. The transmission of the request may be performed by, e.g., the AD update request component 2144 and/or the transmission component 2134 of the apparatus 2102 in FIG. 21. In one example, the request for the new AD may include the updated scheduling offset.

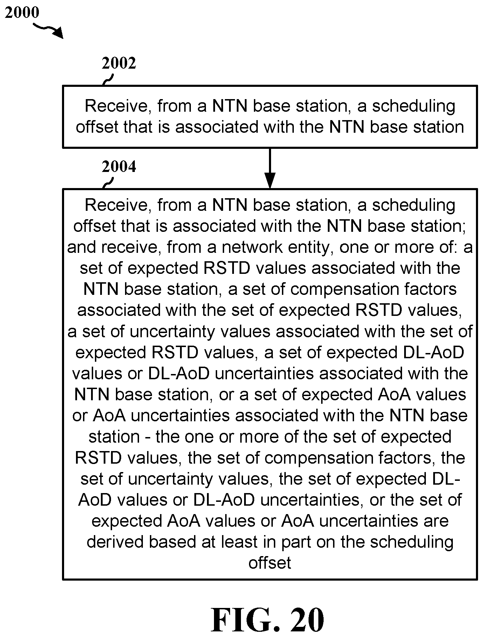

FIG. 20 is a flowchart 2000 of a method of wireless communication. The method may be performed by a UE or a component of a UE (e.g., the UE 104, 350, 404, 602, 702, 810, 902, 1002, 1102, 1202, 1402; the apparatus 2102; a processing system, which may include the memory 360 and which may be the entire UE 350 or a component of the UE 350, such as the TX processor 368, the RX processor 356, and/or the controller/processor 359). The method may enable the UE to apply different communication parameters when communicating with an NTN base station based at least in part on the NTN base station's position, the time, and/or a scheduling offset (K_offset) associated with communications between the UE and the NTN base station.

At 2002, the UE may receive, from an NTN base station, a scheduling offset that is associated with the NTN base station, such as described in connection with FIGs. 10 and 12. For example, at 1006 of FIG. 10, at 1210, the UE 1202 may receive a value list of K_offset from the NTN base station 1204. The reception of the scheduling offset may be performed by, e.g., the scheduling offset process component 2140 and/or the reception component 2130 of the apparatus 2102 in FIG. 21.

At 2004, the UE may receive, from a network entity, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset, such as described in connection with FIG. 12. For example, at 1206, the UE 1202 may receive, from the network entity 1214, a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, and/or a set of expected AoA values or AoA uncertainties associated with the NTN base station, where some of the transmitted parameters may be derived based at least in part on the scheduling offset. The reception of the expected RSTD values, the compensation factors, the uncertainty values, the DL-AoD values or DL-AoD uncertainties, and/or the expected AoA values or AoA uncertainties may be performed by, e.g., the propagation delay calculation component 2142 of the apparatus 2102 in FIG. 21.

In one example, the one or more of the set of expected RSTD values, the set of compensation factors, the set of uncertainty values, the set of expected DL-AoD values or DL-AoD uncertainties, or the set of expected AoA values or AoA uncertainties may be received via an AD.

In another example, the scheduling offset may include multiple offset values, the scheduling offset being at least one of a timing offset, a K_offset, a Koffset, or a K offset. In such an example, the UE may select an expected RSTD value from the set of expected RSTD values based on a current offset value of the multiple offset values, select an uncertainty value from the set of uncertainty values based on a current offset value of the multiple offset values, select an expected DL-AoD value or DL-AoD uncertainty from the set of expected DL-AoD values or DL-AoD uncertainties based on a current offset value of the multiple offset values, and/or select an expected AoA value or AoA uncertainty from the set of expected AoA values or AoA uncertainties based on a current offset value of the multiple offset values.

In another example, the UE may transmit, to the network entity, a request for new AD based on an updated scheduling offset is specified, such as described in connection with FIG. 12. For example, the UE 1202 may transmit, to the network entity 1214, a request for new AD based on the scheduling offset being updated. The transmission of the request may be performed by, e.g., the AD update request component 2144 and/or the transmission component 2134 of the apparatus 2102 in FIG. 21. In one example, the request for the new AD may include the updated scheduling offset.

FIG. 21 is a diagram 2100 illustrating an example of a hardware implementation for an apparatus 2102. The apparatus 2102 may be a UE, a component of a UE, or may implement UE functionality. In some aspects, the apparatus2102 may include a baseband processor 2104 (also referred to as a modem) coupled to at least one transceiver 2122 (e.g., one or more RF transceiver and/or antennas). The at least one transceiver 2122 may be associated with or include a reception component 2130 and/or a transmission component 2134. In some aspects, the apparatus 2102 may further include one or more subscriber identity modules (SIM) cards 2120, an application processor 2106 coupled to a secure digital (SD) card 2108 and a screen 2110, a Bluetooth module 2112, a wireless local area network (WLAN) module 2114, a Global Positioning System (GPS) module 2116, or a power supply 2118. The baseband processor 2104 communicates through the at least one transceiver 2122 with the UE 104, the LMF 185, and/or the base station 102/180. The baseband processor 2104 may include a computer-readable medium / memory (e.g., a memory 2126). The computer-readable medium / memory may be non-transitory. The baseband processor 2104 and/or at least one processor 2128 is responsible for general processing, including the execution of software stored on the computer-readable medium / memory. The software, when executed by the baseband processor 2104 and/or the at least one processor 2128, causes the baseband processor 2104 and/or the at least one processor 2128 to perform the various functions described *supra.* The computer-readable medium / memory may also be used for storing data that is manipulated by the baseband processor 2104 when executing software. The baseband processor 2104 further includes the reception component 2130, a communication manager 2132, and the transmission component 2134. The reception component 2130 and the transmission component 2134 may, in a non-limiting example, include at least one transceiver and/or at least one antenna subsystem. The communication manager 2132 includes the one or more illustrated components. The components within the communication manager 2132 may be stored in the computer-readable medium / memory and/or configured as hardware within the baseband processor 2104. The baseband processor 2104 may be a component of the UE 350 and may include the memory 360 and/or at least one of the TX processor 368, the RX processor 356, and the controller/processor 359. In one configuration, the apparatus 2102 may be a modem chip and include just the baseband processor 2104, and in another configuration, the apparatus 2102 may be the entire UE (e.g., see 350 of FIG. 3) and include the additional modules of the apparatus 2102.

The communication manager 2132 includes a scheduling offset process component 2140 that is configured to receive, from an NTN base station, a scheduling offset that is associated with the NTN base station, e.g., as described in connection with 1902 of FIG. 19 and/or 2002 of FIG. 20. The communication manager 2132 further includes a positioning parameter process component 2142 that is configured to receive, from a network entity, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset, e.g., as described in connection with 1904 of FIG. 19 and/or 2004 of FIG. 20. The communication manager 2132 further includes an AD update request component 2144 that is configured to transmit, to the network entity, a request for new AD based on an updated scheduling offset is specified, e.g., as described in connection with 1906 of FIG. 19.

The apparatus may include additional components that perform each of the blocks of the algorithm in the flowcharts of FIGs. 19 and 20. As such, each block in the flowcharts of FIGs. 19 and 20 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2102 may include a variety of components configured for various functions. In one configuration, the apparatus 2102, and in particular the baseband processor 2104, includes means for receiving, from an NTN base station, a scheduling offset that is associated with the NTN base station (e.g., the scheduling offset process component 2140 and/or the reception component 2130). The apparatus 2102 includes means for receiving, from a network entity, one or more of: a set of expected RSTD values associated with the NTN base station, a set of compensation factors associated with the set of expected RSTD values, a set of uncertainty values associated with the set of expected RSTD values, a set of expected DL-AoD values or DL-AoD uncertainties associated with the NTN base station, or a set of expected AoA values or AoA uncertainties associated with the NTN base station, where the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset (e.g., the positioning parameter process component 2142 and/or the reception component 2130). The apparatus 2102 includes means for transmitting, to the network entity, a request for new AD based on an updated scheduling offset is specified (e.g., the AD update request component 2144 and/or the transmission component 2134).

In one configuration, the one or more of the set of expected RSTD values, the set of compensation factors, the set of uncertainty values, the set of expected DL-AoD values or DL-AoD uncertainties, or the set of expected AoA values or AoA uncertainties may be received via an AD.

In another configuration, the scheduling offset may include multiple offset values, the scheduling offset being at least one of a timing offset, a K_offset, a Koffset, or a K offset. In such an configuration, the apparatus 2102 includes means for selecting an expected RSTD value from the set of expected RSTD values based on a current offset value of the multiple offset values, means for selecting an uncertainty value from the set of uncertainty values based on a current offset value of the multiple offset values, means for selecting an expected DL-AoD value or DL-AoD uncertainty from the set of expected DL-AoD values or DL-AoD uncertainties based on a current offset value of the multiple offset values, and/or means for selecting an expected AoA value or AoA uncertainty from the set of expected AoA values or AoA uncertainties based on a current offset value of the multiple offset values.

In another configuration, the request for the new AD may include the updated scheduling offset.

The means may be one or more of the components of the apparatus 2102 configured to perform the functions recited by the means. As described *supra,* the apparatus 2102 may include the TX Processor 368, the RX Processor 356, and the controller/processor 359. As such, in one configuration, the means may be the TX Processor 368, the RX Processor 356, and the controller/processor 359 configured to perform the functions recited by the means.

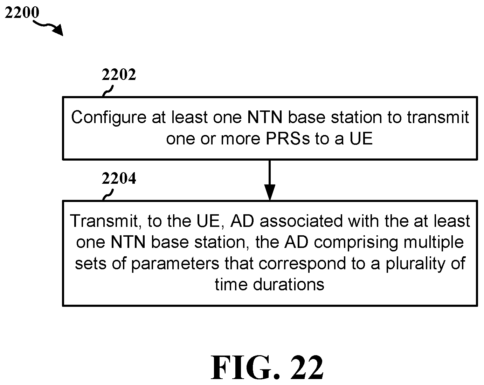

FIG. 22 is a flowchart 2200 of a method of wireless communication. The method may be performed by a network entity or a component of a network entity (e.g., the LMF 185, 706; the network entity 1214, 1414; the apparatus 2302). The method may enable the network entity to configure a UE with various parameters associated with an NTN base station, such that the UE may apply different parameters when the NTN base station is at a different position or at a different time.

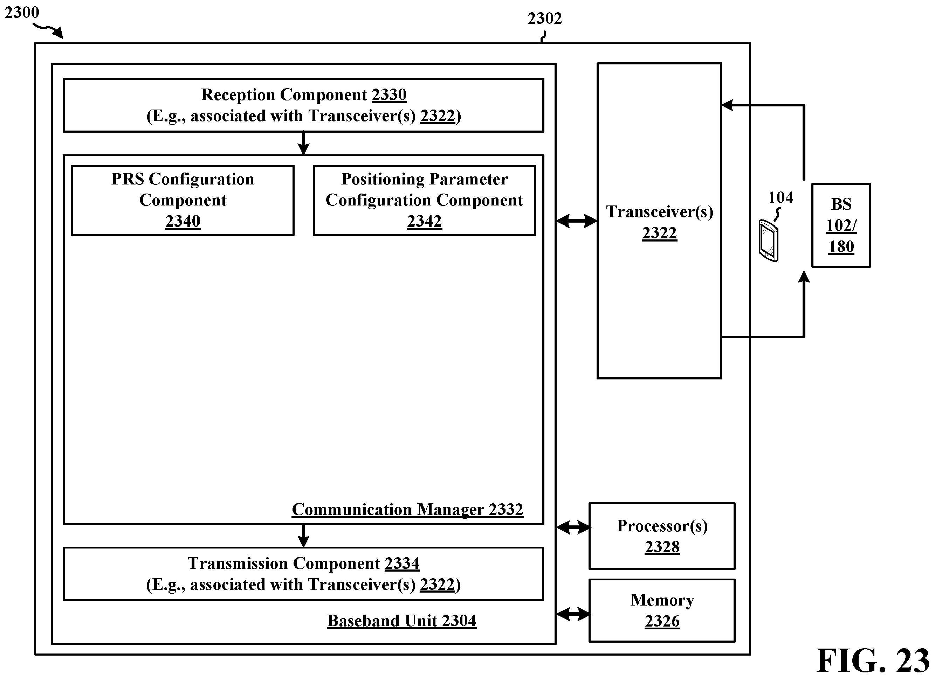

At 2202, the network entity may configure an NTN base station to transmit one or more PRSs to a UE, such as described in connection with FIGs. 4, 6, 7, and 14. For example, the network entity 1414 may configure the NTN base station 1404 to transmit one or more PRSs to the UE 1402 in a positioning session. The configuration of the NTN base station to transmit one or more PRSs to the UE may be performed by, e.g., the PRS configuration component 2340 and/or the transmission component 2334 of the apparatus 2302 in FIG. 23. The NTN base station may be a serving base station, a neighbor base station, or a TRP.

At 2204, the network entity may transmit, to the UE, AD associated with the NTN base station, the AD may include multiple sets of parameters that correspond to a plurality of time durations, such as described in connection with FIG. 14. For example, at 1406, the network entity 1214 may transmit, to the UE 1402, multiple sets of parameters that is based on time. The transmission of the AD may be performed by, e.g., the positioning parameter configuration component 2342 and/or the transmission component 2334 of the apparatus 2302 in FIG. 23.

In one example, each of the multiple sets of parameters may include one or more of: a measurement prioritization associated with PRS resources, PRS resource sets, or TRPs, an expected RSTD value associated with the NTN base station, a compensation factor associated with the expected RSTD value, an uncertainty value associated with the expected RSTD value, an expected DL-AoD value or DL-AoD uncertainty associated with the NTN base station, or an expected AoA value or AoA uncertainty associated with the NTN base station for a corresponding time duration.

In another example, each of the multiple sets of parameters further includes an LOS indicator or an NLOS indicator estimating whether there is an LOS condition or an NLOS condition between the UE and the NTN base station for a corresponding time duration. In such an example, the LOS condition or the NLOS condition between the UE and the NTN base station may be estimated based on a previous positioning of the UE and a current movement of the UE.

In another example, each of the multiple sets of parameters may further include a validity timer for one or more reference cells that indicates a time duration in which a reference cell is valid for measurement.

In another example, each of the multiple sets of parameters may further include a list of expected RSTD values associated with at least one PFL, at least one TRP, or at least one PRS resource set.

FIG. 23 is a diagram 2300 illustrating an example of a hardware implementation for an apparatus 2302. The apparatus 2302 may be a location management function or a network entity, a component of a location management function or a network entity, or may implement location management function/network entity functionality. In some aspects, the apparatus 2302 may include a baseband unit 2304. The baseband unit 2304 may communicate through at least one transceiver 2322 (e.g., one or more RF transceivers and/or antennas) with the UE 104 and/or the base station 102/180. The at least one transceiver 2322 may be associated with or include a reception component 2330 and/or a transmission component 2334. The baseband unit 2304 may include a computer-readable medium / memory (e.g., a memory 2326). The baseband unit 2304 and/or the at least one processor 2328 may be responsible for general processing, including the execution of software stored on the computer-readable medium / memory. The software, when executed by the baseband unit 2304 and/or the at least one processor 2328, causes the baseband unit 2304 and/or the at least one processor 2328 to perform the various functions described *supra.* The computer-readable medium / memory may also be used for storing data that is manipulated by the baseband unit 2304 when executing software. The baseband unit 2304 further includes the reception component 2330, a communication manager 2332, and the transmission component 2334. The reception component 2330 and the transmission component 2334 may, in a non-limiting example, include at least one transceiver and/or at least one antenna subsystem. The communication manager 2332 includes the one or more illustrated components. The components within the communication manager 2332 may be stored in the computer-readable medium / memory and/or configured as hardware within the baseband unit 2304. The baseband unit 2304 may be a component of the base station 310 and may include the memory 376 and/or at least one of the TX processor 316, the RX processor 370, and the controller/processor 375.

The communication manager 2332 includes an PRS configuration component 2340 that is configured to configure an NTN base station to transmit one or more PRSs to a UE, e.g., as described in connection with 2202 of FIG. 22. The communication manager 2332 further includes a positioning parameter configuration component 2342 that is configured to transmit, to the UE, AD associated with the NTN base station, the AD including multiple sets of parameters that correspond to a plurality of time durations, e.g., as described in connection with 2204 of FIG. 22.

The apparatus may include additional components that perform each of the blocks of the algorithm in the flowchart of FIG. 22. As such, each block in the flowchart of FIG. 22 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2302 may include a variety of components configured for various functions. In one configuration, the apparatus 2302, and in particular the baseband unit 2304, includes means for configuring an NTN base station to transmit one or more PRSs to a UE (e.g., the PRS configuration component 2340 and/or the transmission component 2334). The apparatus 2302 includes means for transmitting, to the UE, AD associated with the NTN base station, the AD including multiple sets of parameters that correspond to a plurality of time durations (e.g., the positioning parameter configuration component 2342 and/or the transmission component 2334).

In one configuration, each of the multiple sets of parameters may include one or more of: a measurement prioritization associated with PRS resources, PRS resource sets, or TRPs, an expected RSTD value associated with the NTN base station, a compensation factor associated with the expected RSTD value, an uncertainty value associated with the expected RSTD value, an expected DL-AoD value or DL-AoD uncertainty associated with the NTN base station, or an expected AoA value or AoA uncertainty associated with the NTN base station for a corresponding time duration.

In another configuration, each of the multiple sets of parameters further includes an LOS indicator or an NLOS indicator estimating whether there is an LOS condition or an NLOS condition between the UE and the NTN base station for a corresponding time duration. In such a configuration, the LOS condition or the NLOS condition between the UE and the NTN base station may be estimated based on a previous positioning of the UE and a current movement of the UE.

In another configuration, each of the multiple sets of parameters may further include a validity timer for one or more reference cells that indicates a time duration in which a reference cell is valid for measurement.

In another configuration, each of the multiple sets of parameters may further include a list of expected RSTD values associated with at least one PFL, at least one TRP, or at least one PRS resource set.

The means may be one or more of the components of the apparatus 2302 configured to perform the functions recited by the means. As described supra, the apparatus 2302 may include the TX Processor 316, the RX Processor 370, and the controller/processor 375. As such, in one configuration, the means may be the TX Processor 316, the RX Processor 370, and the controller/processor 375 configured to perform the functions recited by the means.

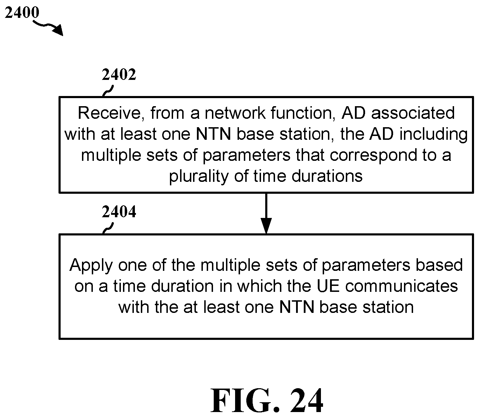

FIG. 24 is a flowchart 2400 of a method of wireless communication. The method may be performed by a UE or a component of a UE (e.g., the UE 104, 350, 404, 602, 702, 810, 902, 1002, 1102, 1202, 1402; the apparatus 2502; a processing system, which may include the memory 360 and which may be the entire UE 350 or a component of the UE 350, such as the TX processor 368, the RX processor 356, and/or the controller/processor 359). The method may enable the UE to apply different communication parameters when communicating with an NTN base station based at least in part on the NTN base station's position and/or the time.

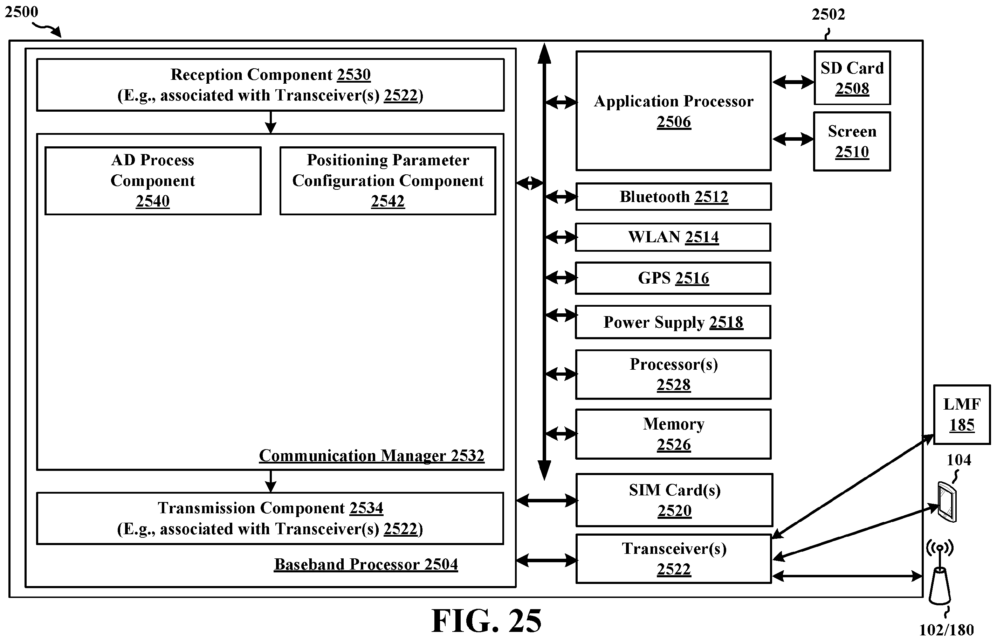

At 2402, the UE may receive, from a network entity, AD associated with an NTN base station, the AD including multiple sets of parameters that correspond to a plurality of time durations, such as described in connection with FIG. 14. For example, at 1406, the UE 1402 may receive, from the network entity 1414, AD associated with at least one NTN base station, where the AD may include multiple sets of parameters that correspond to a plurality of time durations. The reception of the AD may be performed by, e.g., the AD process component 2540 and/or the reception component 2530 of the apparatus 2502 in FIG. 25.

At 2404, the UE may apply one of the multiple sets of parameters based on a time duration in which the UE communicates with the NTN base station, such as described in connection with FIG. 14. For example, the UE 1402 may apply one of the multiple sets of parameters based on a time duration in which the UE 1402 communicates with the NTN base station 1404. The application of the one of the multiple sets of parameters may be performed by, e.g., the positioning parameter configuration component 2542, the reception component 2530, and/or the transmission component 2534 of the apparatus 2502 in FIG. 25.

In one example, each of the multiple sets of parameters may include one or more of: a measurement prioritization associated with PRS resources, PRS resource sets, or TRPs, an expected RSTD value associated with the NTN base station, a compensation factor associated with the expected RSTD value, an uncertainty value associated with the expected RSTD value, an expected DL-AoD value or DL-AoD uncertainty associated with the NTN base station, or an expected AoA value or AoA uncertainty associated with the NTN base station for a corresponding time duration.

In another example, the UE may apply a first set of parameters from the multiple sets of parameters for communicating with the NTN base station based on the UE being in a first time duration, and the UE may apply a second set of parameters from the multiple sets of parameters for communicating with the NTN base station based on the UE being in a second time duration. In such an example, the UE may switch from applying the first set of parameters to applying the second set of parameters based on a pathloss-based parameterization or a formula-based parametrization.

In another example, each of the multiple sets of parameters may further include an LOS indicator or an NLOS indicator estimating whether there is an LOS condition or an NLOS condition between the UE and the NTN base station for a corresponding time duration. In such an example, the UE may apply an algorithm for finding an earliest arrival path if there is the NLOS condition between the UE and the NTN base station for the corresponding time duration, and/or the UE may refrain from applying an algorithm for finding an earliest arrival path if there is the LOS condition between the UE and the NTN base station for the corresponding time duration.

In another example, each of the multiple sets of parameters may further include a validity timer for one or more reference cells that indicates a time duration in which a reference cell is valid for measurement.

In another example, each of the multiple sets of parameters may further include a list of expected RSTD values associated with at least one PFL, at least one TRP, or at least one PRS resource set.

FIG. 25 is a diagram 2500 illustrating an example of a hardware implementation for an apparatus 2502. The apparatus 2502 may be a UE, a component of a UE, or may implement UE functionality. In some aspects, the apparatus2502 may include a baseband processor 2504 (also referred to as a modem) coupled to at least one transceiver 2522 (e.g., one or more RF transceiver and/or antennas). The at least one transceiver 2522 may be associated with or include a reception component 2530 and/or a transmission component 2534. In some aspects, the apparatus 2502 may further include one or more subscriber identity modules (SIM) cards 2520, an application processor 2506 coupled to a secure digital (SD) card 2508 and a screen 2510, a Bluetooth module 2512, a wireless local area network (WLAN) module 2514, a Global Positioning System (GPS) module 2516, or a power supply 2518. The baseband processor 2504 communicates through the at least one transceiver 2522 with the UE 104, the LMF 185, and/or the base station 102/180. The baseband processor 2504 may include a computer-readable medium / memory (e.g., a memory 2526). The computer-readable medium / memory may be non-transitory. The baseband processor 2504 and/or at least one processor 2528 is responsible for general processing, including the execution of software stored on the computer-readable medium / memory. The software, when executed by the baseband processor 2504 and/or the at least one processor 2528, causes the baseband processor 2504 and/or the at least one processor 2528 to perform the various functions described *supra.* The computer-readable medium / memory may also be used for storing data that is manipulated by the baseband processor 2504 when executing software. The baseband processor 2504 further includes the reception component 2530, a communication manager 2532, and the transmission component 2534. The reception component 2530 and the transmission component 2534 may, in a non-limiting example, include at least one transceiver and/or at least one antenna subsystem. The communication manager 2532 includes the one or more illustrated components. The components within the communication manager 2532 may be stored in the computer-readable medium / memory and/or configured as hardware within the baseband processor 2504. The baseband processor 2504 may be a component of the UE 350 and may include the memory 360 and/or at least one of the TX processor 368, the RX processor 356, and the controller/processor 359. In one configuration, the apparatus 2502 may be a modem chip and include just the baseband processor 2504, and in another configuration, the apparatus 2502 may be the entire UE (e.g., see 350 of FIG. 3) and include the additional modules of the apparatus 2502.

The communication manager 2532 includes an AD process component 2540 that is configured to receive, from a network entity, AD associated with an NTN base station, the AD including multiple sets of parameters that correspond to a plurality of time durations, e.g., as described in connection with 2402 of FIG. 24. The communication manager 2532 further includes a positioning parameter configuration component 2542 that is configured to apply at least one of the multiple sets of parameters based on a time duration in which the UE communicates with the NTN base station, e.g., as described in connection with 2404 of FIG. 24.

The apparatus may include additional components that perform each of the blocks of the algorithm in the flowcharts of FIG. 24. As such, each block in the flowcharts of FIG. 24 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2502 may include a variety of components configured for various functions. In one configuration, the apparatus 2502, and in particular the baseband processor 2504, includes means for receiving, from a network entity, AD associated with an NTN base station, the AD including multiple sets of parameters that correspond to a plurality of time durations (e.g., the AD process component 2540 and/or the reception component 2530). The apparatus 2502 includes means for applying at least one of the multiple sets of parameters based on a time duration in which the UE communicates with the NTN base station (e.g., the positioning parameter configuration component 2542, the reception component 2530, and/or the transmission component 2534).

In one configuration, each of the multiple sets of parameters may include one or more of: a measurement prioritization associated with PRS resources, PRS resource sets, or TRPs, an expected RSTD value associated with the NTN base station, a compensation factor associated with the expected RSTD value, an uncertainty value associated with the expected RSTD value, an expected DL-AoD value or DL-AoD uncertainty associated with the NTN base station, or an expected AoA value or AoA uncertainty associated with the NTN base station for a corresponding time duration.

In another configuration, the apparatus 2502 includes means for applying a first set of parameters from the multiple sets of parameters for communicating with the NTN base station based on the UE being in a first time duration, and means for applying a second set of parameters from the multiple sets of parameters for communicating with the NTN base station based on the UE being in a second time duration. In such a configuration, the apparatus 2502 includes means for switching from applying the first set of parameters to applying the second set of parameters based on a pathloss-based parameterization or a formula-based parametrization.

In another configuration, each of the multiple sets of parameters may further include an LOS indicator or an NLOS indicator estimating whether there is an LOS condition or an NLOS condition between the UE and the NTN base station for a corresponding time duration. In such a configuration, the apparatus 2502 includes means for applying an algorithm for finding an earliest arrival path if there is the NLOS condition between the UE and the NTN base station for the corresponding time duration, and/or means for refraining from applying an algorithm for finding an earliest arrival path if there is the LOS condition between the UE and the NTN base station for the corresponding time duration.

In another configuration, each of the multiple sets of parameters may further include a validity timer for one or more reference cells that indicates a time duration in which a reference cell is valid for measurement.

In another configuration, each of the multiple sets of parameters may further include a list of expected RSTD values associated with at least one PFL, at least one TRP, or at least one PRS resource set.

The means may be one or more of the components of the apparatus 2502 configured to perform the functions recited by the means. As described *supra,* the apparatus 2502 may include the TX Processor 368, the RX Processor 356, and the controller/processor 359. As such, in one configuration, the means may be the TX Processor 368, the RX Processor 356, and the controller/processor 359 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus (1802) for wireless communication at a network entity, comprising:
a memory (1826);
a transceiver (1822); and
at least one processor (1828) communicatively connected to the memory and the transceiver, the at least one processor configured to:
identify (1604, 1704) a scheduling offset that is associated with a non-terrestrial network, NTN, base station; and
transmit (1606, 1706), to a user equipment, UE, communicating with the NTN base station, one or more of:
a set of expected reference signal time difference, RSTD, values associated with the NTN base station,
a set of compensation factors associated with the set of expected RSTD values,
a set of uncertainty values associated with the set of expected RSTD values,
a set of expected downlink, DL,-angle of departure, AoD, values or DL-AoD uncertainties associated with the NTN base station, or
a set of expected angle of arrival, AoA, values or AoA uncertainties associated with the NTN base station,
wherein the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset.

2. The apparatus (1802) of claim 1, wherein to identify the scheduling offset, the at least one processor is further configured to:
receive (1602) the scheduling offset from the NTN base station or the UE.

3. The apparatus (1802) of claim 1, wherein the one or more of the set of expected RSTD values, the set of compensation factors, the set of uncertainty values, the set of expected DL-AoD values or DL-AoD uncertainties, or the set of expected AoA values or AoA uncertainties are transmitted via assistance data, AD.

4. The apparatus (1802) of claim 1, wherein the scheduling offset comprises multiple offset values, the scheduling offset being at least one of a timing offset, a K_offset, a Koffset, or a K offset, preferably wherein each of the multiple offset values corresponds to one or more of: an expected RSTD value within the set of expected RSTD values, an uncertainty value within the set of uncertainty values, an expected DL-AoD value or DL-AoD uncertainty within the set of expected DL-AoD values or DL-AoD uncertainties, or an expected AoA value or AoA uncertainty within the set of expected AoA values or AoA uncertainties.

5. The apparatus (1802) of claim 1, wherein the scheduling offset is associated with at least one positioning frequency layer, PFL, at least one transmission reception point, TRP, or at least one positioning reference signal, PRS, resource set, preferably wherein the at least one processor is further configured to:
configure the UE to prioritize measurements for the at least one PFL, the at least one TRP, or the at least one PRS resource set based on the scheduling offset.

6. The apparatus (1802) of claim 1, wherein the at least one processor is further configured to:
associate the scheduling offset with the one or more of the set of expected RSTD values, the set of compensation factors, the set of uncertainty values, the set of expected DL-AoD values or DL-AoD uncertainties, or the set of expected AoA values or AoA uncertainties; and
apply the association to multiple transmission reception points, TRPs, multiple beams of a TRP, or multiple positioning reference signal, PRS, resource sets.

7. The apparatus (1802) of claim 1, wherein the set of expected RSTD values, the set of compensation factors, the set of uncertainty values, the set of expected DL-AoD values or DL-AoD uncertainties, or the set of expected AoA values or AoA uncertainties is derived from the scheduling offset based on simple scaling, a linear model, a higher order model, or an update cycle.

8. The apparatus (1802) of claim 1, wherein the at least one processor is further configured to:
transmit, to the UE, a mechanism to derive the set of expected RSTD values, the set of compensation factors, the set of uncertainty values, the set of expected DL-AoD values or DL-AoD uncertainties, or the set of expected AoA values or AoA uncertainties from the scheduling offset based on simple scaling, a linear model, a higher order model, or an update cycle.

9. The apparatus (1802) of claim 1, wherein the NTN base station is a serving base station, a neighbor base station, or a transmission reception point, TRP, and the network entity is a location management function, LMF.

10. The apparatus (1802) of claim 1, wherein the at least one processor is further configured to:
receive an updated scheduling offset associated with the NTN base station; and
transmit, to the UE communicating with the NTN base station, one or more of:
a second set of expected RSTD values associated with the NTN base station,
a second set of compensation factors associated with the set of expected RSTD values,
a second set of uncertainty values associated with the set of expected RSTD values,
a second set of expected DL-AoD values or DL-AoD uncertainties associated with the NTN base station, or
a second set of expected AoA values or AoA uncertainties associated with the NTN base station,
wherein the one or more of the second set of expected RSTD values, the second set of compensation factors, the second set of uncertainty values, the second set of expected DL-AoD values or DL-AoD uncertainties, or the second set of expected AoA values or AoA uncertainties are derived based at least in part on the updated scheduling offset.

11. The apparatus (1802) of claim 10, wherein the at least one processor is further configured to:
receive, from the UE, a request for new assistance data, AD, based on the updated scheduling offset being specified, wherein preferably the request for the new AD includes the updated scheduling offset; and / or
receive, from the NTN base station or a serving base station, an indication to activate the updated scheduling offset for the UE to communicate with the NTN base station.

12. An apparatus (2102) for wireless communication at a user equipment, UE, comprising:
a memory (2126);
a transceiver (2122); and
at least one processor communicatively connected to the memory and the transceiver (2128), the at least one processor configured to:
receive (1902, 2002), from a non-terrestrial network, NTN, base station, a scheduling offset that is associated with the NTN base station; and
receive (1904, 2004), from a network entity, one or more of:
a set of expected reference signal time difference, RSTD, values associated with the NTN base station,
a set of compensation factors associated with the set of expected RSTD values,
a set of uncertainty values associated with the set of expected RSTD values,
a set of expected downlink, DL, angle of departure, AoD, values or DL-AoD uncertainties associated with the NTN base station, or
a set of expected angle of arrival, AoA, values or AoA uncertainties associated with the NTN base station,
wherein the one or more of the set of expected RSTD values, the set of compensation factors, the set of uncertainty values, the set of expected DL-AoD values or DL-AoD uncertainties, or the set of expected AoA values or AoA uncertainties are derived based at least in part on the scheduling offset.

13. The apparatus (2102) of claim 12, wherein the one or more of the set of expected RSTD values, the set of compensation factors, the set of uncertainty values, the set of expected DL-AoD values or DL-AoD uncertainties, or the set of expected AoA values or AoA uncertainties are received via assistance data, AD.

14. The apparatus (2102) of claim 12, wherein the scheduling offset comprises multiple offset values, the scheduling offset being at least one of a timing offset, a K_offset, a Koffset, or a K offse, preferably wherein the at least one processor is further configured to:
select one or more of: an expected RSTD value from the set of expected RSTD values based on a current offset value of the multiple offset values, an uncertainty value from the set of uncertainty values based on the current offset value of the multiple offset values, an expected DL-AoD value or DL-AoD uncertainty from the set of expected DL-AoD values or DL-AoD uncertainties based on the current offset value of the multiple offset values, or an expected AoA value or AoA uncertainty from the set of expected AoA values or AoA uncertainties based on the current offset value of the multiple offset values.

15. The apparatus (2102) of claim 12, wherein the at least one processor is further configured to:
transmit, to the network entity, a request for new assistance data, AD, based on an updated scheduling offset is specified, wherein the request for the new AD includes the updated scheduling offset.

## Patentansprüche

1. Vorrichtung (1802) zur drahtlosen Kommunikation an einer Netzwerkentität, die Folgendes umfasst:
einen Speicher (1826);
einen Transceiver (1822); und
mindestens einen Prozessor (1828), der mit dem Speicher und dem Transceiver kommunikativ verbunden ist, wobei der mindestens eine Prozessor konfiguriert ist zum:
Identifizieren (1604, 1704) eines Scheduling-Offset, der mit einer NTN-(Non-Terrestrial Network)-Basisstation assoziiert ist; und
Übertragen (1606, 1706), zu einem mit der NTN-Basisstation kommunizierenden Benutzergerät, UE, von einem oder mehreren von:
einem Satz von mit der NTN-Basisstation assoziierten erwarteten RSTD-(Reference Signal Time Difference)-Werten,
einem Satz von mit dem Satz von erwarteten RSTD-Werten assoziierten Kompensationsfaktoren,
einem Satz von mit dem Satz von erwarteten RSTD-Werten assoziierten Unsicherheitswerten,
einem Satz von mit der NTN-Basisstation assoziierten erwarteten DL-(Downlink)-AoD-(Angle of Departure)-Werten oder DL-AoD-Unsicherheiten, oder
einem Satz von mit der NTN-Basisstation assoziierten erwarteten AoD-(Angle of Arrival)-Werten oder DL-AoD-Unsicherheiten,
wobei die ein oder mehreren von dem Satz von erwarteten RSTD-Werten, dem Satz von Kompensationsfaktoren, dem Satz von Unsicherheitswerten, dem Satz von erwarteten DL-AoD-Werten oder DL-AoD-Unsicherheiten oder dem Satz von erwarteten AoA-Werten oder AoA-Unsicherheiten zumindest teilweise auf der Basis des Scheduling-Offset abgeleitet werden.

2. Vorrichtung (1802) nach Anspruch 1, wobei zum Identifizieren des Scheduling-Offset der mindestens eine Prozessor ferner konfiguriert ist zum:
Empfangen (1602) des Scheduling-Offset von der NTN-Basisstation oder dem UE.

3. Vorrichtung (1802) nach Anspruch 1, wobei die ein oder mehreren aus dem Satz von erwarteten RSTD-Werten, dem Satz von Kompensationsfaktoren, dem Satz von Unsicherheitswerten, dem Satz von erwarteten DL-AoD-Werten oder DL-AoD-Unsicherheiten und dem Satz von erwarteten AoA-Werten oder AoA-Unsicherheiten über Assistenzdaten (AD) übertragen werden.

4. Vorrichtung (1802) nach Anspruch 1, wobei der Scheduling-Offset mehrere Offsetwerte umfasst, wobei der Scheduling-Offset mindestens eines ist von einem Timing-Offset, einem K_Offset, einem Koffset und einem K-Offset, wobei vorzugsweise jeder der mehreren Offsetwerte einem oder mehreren entspricht von: einem erwarteten RSTD-Wert innerhalb des Satzes von erwarteten RSTD-Werten, einem Unsicherheitswert innerhalb des Satzes von Unsicherheitswerten, einem erwarteten DL-AoD-Wert oder einer DL-AoD-Unsicherheit innerhalb des Satzes von erwarteten DL-AoD-Werten oder DL-AoD-Unsicherheiten und einem erwarteten AoA-Wert oder einer AoA-Unsicherheit innerhalb des Satzes von erwarteten AoA-Werten oder AoA-Unsicherheiten.

5. Vorrichtung (1802) nach Anspruch 1, wobei der Scheduling-Offset mit mindestens einer PFL (Positioning Frequency Layer), mindestens einem TRP (Transmission Reception Point) oder mindestens einem PRS-(Positioning Reference Signal)-Ressourcensatz assoziiert ist, wobei der mindestens eine Prozessor vorzugsweise ferner konfiguriert ist zum:
Konfigurieren des UE zum Priorisieren von Messungen für die mindestens eine PFL, den mindestens einen TRP oder den mindestens einen PRS-Ressourcensatz auf der Basis des Scheduling-Offset.

6. Vorrichtung (1802) nach Anspruch 1, wobei der mindestens eine Prozessor ferner konfiguriert ist zum:
Assoziieren des Scheduling-Offset mit den ein oder mehreren von dem Satz von erwarteten RSTD-Werten, dem Satz von Kompensationsfaktoren, dem Satz von Unsicherheitswerten, dem Satz von erwarteten DL-AoD-Werten oder DL-AoD-Unsicherheiten und dem Satz von erwarteten AoA-Werten oder AoA-Unsicherheiten; und
Anwenden der Assoziation auf mehrere TRPs (Transmission Reception Points), mehrere Strahlen eines TRP oder mehrere PRS-(Positioning Reference Signal)-Ressourcensätze.

7. Vorrichtung (1802) nach Anspruch 1, wobei der Satz von erwarteten RSTD-Werten, der Satz von Kompensationsfaktoren, der Satz von Unsicherheitswerten, der Satz von erwarteten DL-AoD-Werten oder DL-AoD-Unsicherheiten oder der Satz von erwarteten AoA-Werten oder AoA-Unsicherheiten aus dem Scheduling-Offset auf der Basis einer einfachen Skalierung, eines linearen Modells, eines Modells höherer Ordnung oder eines Aktualisierungszyklus abgeleitet wird.

8. Vorrichtung (1802) nach Anspruch 1, wobei der mindestens eine Prozessor ferner konfiguriert ist zum:
Übertragen, zu dem UE, eines Mechanismus zum Ableiten des Satzes von erwarteten RSTD-Werten, des Satzes von Kompensationsfaktoren, des Satzes von Unsicherheitswerten, des Satzes von erwarteten DL-AoD-Werten oder DL-AoD-Unsicherheiten oder des Satzes von erwarteten AoA-Werten oder AoA-Unsicherheiten aus dem Scheduling-Offset auf der Basis einer einfachen Skalierung, eines linearen Modells, eines Modells höherer Ordnung oder eines Aktualisierungszyklus.

9. Vorrichtung (1802) nach Anspruch 1, wobei die NTN-Basisstation eine bedienende Basisstation, eine Nachbarbasisstation oder ein TRP (Transmission Reception Point) ist und die Netzwerkentität eine LMF (Location Management Function) ist.

10. Vorrichtung (1802) nach Anspruch 1, wobei der mindestens eine Prozessor ferner konfiguriert ist zum:
Empfangen eines mit der NTN-Basisstation assoziierten aktualisierten Scheduling-Offset; und
Übertragen, zu dem mit der NTN-Basisstation kommunizierenden UE, eines oder mehrerer von:
einem zweiten Satz von mit der NTN-Basisstation assoziierten erwarteten RSTD-Werten,
einem zweiten Satz von mit dem Satz von erwarteten RSTD-Werten assoziierten Kompensationsfaktoren,
einem zweiten Satz von mit dem Satz von erwarteten RSTD-Werten assoziierten Unsicherheitswerten,
einem zweiten Satz von mit der NTN-Basisstation assoziierten erwarteten DL-AoD-Werten oder DL-AoD-Unsicherheiten, und
einem zweiten Satz von mit der NTN-Basisstation assoziierten erwarteten AoA-Werten oder AoA-Unsicherheiten,
wobei die ein oder mehreren von dem zweiten Satz von erwarteten RSTD-Werten, dem zweiten Satz von Kompensationsfaktoren, dem zweiten Satz von Unsicherheitswerten, dem zweiten Satz von erwarteten DL-AoD-Werten oder DL-AoD-Unsicherheiten und dem zweiten Satz von erwarteten AoA-Werten oder AoA-Unsicherheiten zumindest teilweise auf der Basis des Scheduling-Offset abgeleitet werden.

11. Vorrichtung (1802) nach Anspruch 10, wobei der mindestens eine Prozessor ferner konfiguriert ist zum:
Empfangen, von dem UE, einer Anforderung für neue Assistenzdaten (AD) auf der Basis des vorgegebenen aktualisierten Scheduling-Offset, wobei die Anforderung für die neuen AD vorzugsweise den aktualisierten Scheduling-Offset enthält; und/oder
Empfangen, von der NTN-Basisstation oder einer bedienenden Basisstation, einer Anzeige zum Aktivieren des aktualisierten Scheduling-Offset, damit das UE mit der NTN-Basisstation kommunizieren kann.

12. Vorrichtung (2102) zur drahtlosen Kommunikation an einem Benutzergerät UE, die Folgendes umfasst:
einen Speicher (2126);
einen Transceiver (2122); und
mindestens einen Prozessor, der mit dem Speicher und dem Transceiver (2128) kommunikativ verbunden ist, wobei der mindestens eine Prozessor konfiguriert ist zum:
Empfangen (1902, 2002), von einer NTN-(Non-Terrestral Network)-Basisstation, eines mit der NTN-Basisstation assoziierten Scheduling-Offset; und
Empfangen (1904, 2004), von einer Netzwerkentität, von einem oder mehreren von:
einem Satz von mit der NTN-Basisstation assoziierten erwarteten RSTD-(Reference Signal Time Difference)-Werten,
einem Satz von mit dem Satz von erwarteten RSTD-Werten assoziieren Kompensationsfaktoren,
einem Satz von mit dem Satz von erwarteten RSTD-Werten assoziierten Unsicherheitswerten,
einem Satz von mit der NTN-Basisstation assoziierten erwarteten DL-(Downlink)-AoD-(Angle of Departure)-Werten oder DL-AoD-Unsicherheiten, und
einem Satz von mit der NTN-Basisstation assoziierten erwarteten AoA-Werten oder AoA-Unsicherheiten,
wobei die ein oder mehreren von dem Satz von erwarteten RSTD-Werten, dem Satz von Kompensationsfaktoren, dem Satz von Unsicherheitswerten, dem Satz von erwarteten DL-AoD-Werten oder DL-AoD-Unsicherheiten und dem Satz von erwarteten AoA-Werten oder AoA-Unsicherheiten zumindest teilweise auf der Basis des Scheduling-Offset abgeleitet werden.

13. Vorrichtung (2102) nach Anspruch 12, wobei die ein oder mehreren aus dem Satz von erwarteten RSTD-Werten, dem Satz von Kompensationsfaktoren, dem Satz von Unsicherheitswerten, dem Satz von erwarteten DL-AoD-Werten oder DL-AoD-Unsicherheiten und dem Satz von erwarteten AoA-Werten oder AoA-Unsicherheiten über Assistenzdaten (AD) übertragen werden.

14. Vorrichtung (2102) nach Anspruch 12, wobei der Scheduling-Offset mehrere Offsetwerte umfasst, wobei der Scheduling-Offset mindestens eines ist von einem Timing-Offset, einem K_Offset, einem Koffset und einem K-Offset, wobei vorzugsweise der mindestens eine Prozessor konfiguriert ist zum:
Auswählen von einem oder mehreren von: einem erwarteten RSTD-Wert aus dem Satz von erwarteten RSTD-Werten auf der Basis eines aktuellen Offsetwerts der mehreren Offsetwerte, einem Unsicherheitswert aus dem Satz von Unsicherheitswerten auf der Basis des aktuellen Offsetwerts der mehreren Offsetwerte, einem erwarteten DL-AoD-Wert oder einer DL-AoD-Unsicherheit aus dem Satz von erwarteten DL-AoD-Werten oder DL-AoD-Unsicherheiten auf der Basis des aktuellen Offsetwerts der mehreren Offsetwerte und einem erwarteten AoA-Wert oder einer AoA-Unsicherheit aus dem Satz von erwarteten AoA-Werten oder AoA-Unsicherheiten auf der Basis des aktuellen Offsetwerts der mehreren Offsetwerte.

15. Vorrichtung (2102) nach Anspruch 12, wobei der mindestens eine Prozessor ferner konfiguriert ist zum:
Übertragen, zu der Netzwerkentität, einer Anforderung für neue Assistenzdaten (AD) auf der Basis eines aktualisierten Scheduling-Offset, der vorgegeben ist, wobei die Anforderung für die neuen AD den aktualisierten Scheduling-Offset enthält.

## Revendications

1. Appareil (1802) de communication sans fil au niveau d'une entité de réseau, comprenant :
une mémoire (1826) ;
un émetteur-récepteur (1822) ; et
au moins un processeur (1828) connecté en communication à la mémoire et à l'émetteur-récepteur, l'au moins un processeur étant configuré pour :
identifier (1604, 1704) un décalage d'ordonnancement associé à une station de base de réseau non terrestre, NTN ; et
transmettre (1606, 1706), à un équipement utilisateur, UE, communiquant avec la station de base NTN, un ou plusieurs des ensembles suivants :
un ensemble de valeurs de différence temporelle de signal de référence, RSTD, attendues associé à la station de base NTN,
un ensemble de facteurs de compensation associé à l'ensemble de valeurs RSTD attendues,
un ensemble de valeurs d'incertitude associé à l'ensemble de valeurs RSTD attendues,
un ensemble de valeurs d'angles de départ, AoD, de liaison descendante, DL, ou d'incertitudes DL-AoD attendues associé à la station de base NTN, ou
un ensemble de valeurs d'angles d'arrivée, AoA, ou d'incertitudes AoA attendues associé à la station de base NTN,
dans lequel les un ou plusieurs de l'ensemble de valeurs RSTD attendues, de l'ensemble de facteurs de compensation, de l'ensemble de valeurs d'incertitude, de l'ensemble de valeurs DL-AoD ou d'incertitudes DL-AoD attendues, ou de l'ensemble de valeurs AoA ou d'incertitudes AoA attendues sont dérivés sur la base au moins en partie du décalage d'ordonnancement.

2. Appareil (1802) selon la revendication 1, dans lequel, pour identifier le décalage d'ordonnancement, l'au moins un processeur est configuré en outre pour :
recevoir (1602) le décalage d'ordonnancement à partir de la station de base NTN ou de l'UE.

3. Appareil (1802) selon la revendication 1, dans lequel les un ou plusieurs de l'ensemble de valeurs RSTD attendues, de l'ensemble de facteurs de compensation, de l'ensemble de valeurs d'incertitude, de l'ensemble de valeurs DL-AoD ou d'incertitudes DL-AoD attendues, ou de l'ensemble de valeurs AoA ou d'incertitudes AoA attendues sont transmis par l'intermédiaire de données d'assistance, AD.

4. Appareil (1802) selon la revendication 1, dans lequel le décalage d'ordonnancement comprend de multiples valeurs de décalage, le décalage d'ordonnancement étant au moins l'un d'un décalage de synchronisation, décalage_K, décalageK ou décalage K, de préférence dans lequel chacune des multiples valeurs de décalage correspond à une ou plusieurs : d'une valeur RSTD attendue dans l'ensemble de valeurs RSTD attendues, d'une valeur d'incertitude dans l'ensemble de valeurs d'incertitude, d'une valeur DL-AoD ou incertitude DL_AoD attendue dans l'ensemble de valeurs DL-AoD ou d'incertitudes DL-AoD attendues, ou d'une valeur AoA ou incertitude AoA attendue dans l'ensemble de valeurs AoA ou d'incertitudes AoA attendues.

5. Appareil (1802) selon la revendication 1, dans lequel le décalage d'ordonnancement est associé à au moins une couche de fréquence de positionnement, PFL, au moins un point d'émission-réception, TRP, ou au moins un ensemble de ressources de signal de référence de positionnement, PRS, de préférence dans lequel l'au moins un processeur est configuré en outre pour :
configurer l'UE pour prioriser des mesures de l'au moins une PFL, de l'au moins un TRP, ou de l'au moins un ensemble de ressources PRS sur la base du décalage d'ordonnancement.

6. Appareil (1802) selon la revendication 1, dans lequel l'au moins un processeur est configuré en outre pour :
associer le décalage d'ordonnancement aux un ou plusieurs de l'ensemble de valeurs RSTD attendues, de l'ensemble de facteurs de compensation, de l'ensemble de valeurs d'incertitude, de l'ensemble de valeurs DL-AoD ou d'incertitudes DL-AoD attendues, ou de l'ensemble de valeurs AoA ou d'incertitudes AoA attendues ; et
appliquer l'association à de multiples points d'émission-réception, TRP, à de multiples faisceaux d'un TRP, ou à de multiples ensembles de ressources de signal de référence de positionnement, PRS.

7. Appareil (1802) selon la revendication 1, dans lequel l'ensemble de valeurs RSTD attendues, l'ensemble de facteurs de compensation, l'ensemble de valeurs d'incertitude, l'ensemble de valeurs DL-AoD ou d'incertitudes DL-AoD attendues, ou l'ensemble de valeurs AoA ou d'incertitudes AoA attendues est dérivé à partir du décalage d'ordonnancement sur la base d'une mise à l'échelle simple, d'un modèle linéaire, d'un modèle d'ordre supérieur, ou d'un cycle de mise à jour.

8. Appareil (1802) selon la revendication 1, dans lequel l'au moins un processeur est configuré en outre pour :
transmettre, à l'UE, un mécanisme pour dériver l'ensemble de valeurs RSTD attendues, l'ensemble de facteurs de compensation, l'ensemble de valeurs d'incertitude, l'ensemble de valeurs DL-AoD ou d'incertitudes DL-AoD attendues, ou l'ensemble de valeurs AoA ou d'incertitudes AoA attendues à partir du décalage d'ordonnancement sur la base d'une mise à l'échelle simple, d'un modèle linéaire, d'un modèle d'ordre supérieur, ou d'un cycle de mise à jour.

9. Appareil (1802) selon la revendication 1, dans lequel la station de base NTN est une station de base de desserte, une station de base voisine ou un point d'émission-réception, TRP, et l'entité de réseau est une fonction de gestion de localisation, LMF.

10. Dispositif (1802) selon la revendication 1, dans lequel l'au moins un processeur est configuré en outre pour :
recevoir un décalage d'ordonnancement mis à jour associé à la station de base NTN ;
et
transmettre, à l'UE communiquant avec la station de base NTN, un ou plusieurs des ensembles suivants :
un second ensemble de valeurs RSTD attendues associé à la station de base NTN,
un second ensemble de facteurs de compensation associé à l'ensemble de valeurs RSTD attendues,
un second ensemble de valeurs d'incertitude associé à l'ensemble de valeurs RSTD attendues,
un second ensemble de valeurs DL-AoD ou d'incertitudes DL-AoD attendues associé à la station de base NTN, ou
un second ensemble de valeurs AoA ou d'incertitudes AoA attendues associé à la station de base NTN,
dans lequel les un ou plusieurs du second ensemble de valeurs RSTD attendues, du second ensemble de facteurs de compensation, du second ensemble de valeurs d'incertitude, du second ensemble de valeurs DL-AoD ou d'incertitudes DL-AoD attendues, ou du second ensemble de valeurs AoA ou d'incertitudes AoA attendues sont dérivés sur la base au moins en partie du décalage d'ordonnancement mis à jour.

11. Appareil (1802) selon la revendication 10, dans lequel l'au moins un processeur est configuré en outre pour :
recevoir, à partir de l'UE, une demande de nouvelles données d'assistance, AD, sur la base du décalage d'ordonnancement mis à jour spécifié, dans lequel de préférence la demande de nouvelles AD comporte le décalage d'ordonnancement mis à jour ; et/ou
recevoir, à partir de la station de base NTN ou d'une station de base de desserte, une indication d'activer le décalage d'ordonnancement mis à jour pour que l'UE puisse communiquer avec la station de base NTN.

12. Appareil (2102) de communication sans fil au niveau d'un équipement utilisateur, UE, comprenant :
une mémoire (2126) ;
un émetteur-récepteur (2122) ; et
au moins un processeur connecté en communication à la mémoire et à l'émetteur-récepteur (2128), l'au moins un processeur étant configuré pour :
recevoir (1902, 2002), à partir d'une station de base de réseau non terrestre, NTN, un décalage d'ordonnancement associé à la station de base NTN ; et
recevoir (1904, 2004), à partir d'une entité de réseau, un ou plusieurs des ensembles suivants :
un ensemble de valeurs de différence temporelle de signal de référence, RSTD, attendues associé à la station de base NTN,
un ensemble de facteurs de compensation associé à l'ensemble de valeurs RSTD attendues,
un ensemble de valeurs d'incertitude associé à l'ensemble de valeurs RSTD attendues,
un ensemble de valeurs d'angles de départ, AoD, de liaison descendante, DL, ou d'incertitudes DL-AoD attendues associé à la station de base NTN, ou
un ensemble de valeurs d'angles d'arrivée, AoA, ou d'incertitudes AoA attendues associé à la station de base NTN,
dans lequel les un ou plusieurs de l'ensemble de valeurs RSTD attendues, de l'ensemble de facteurs de compensation, de l'ensemble de valeurs d'incertitude, de l'ensemble de valeurs DL-AoD ou d'incertitudes DL-AoD attendues, ou de l'ensemble de valeurs AoA ou d'incertitudes AoA attendues sont dérivés sur la base au moins en partie du décalage d'ordonnancement.

13. Appareil selon la revendication 12, dans lequel les un ou plusieurs de l'ensemble de valeurs RSTD attendues, de l'ensemble de facteurs de compensation, de l'ensemble de valeurs d'incertitude, de l'ensemble de valeurs DL-AoD ou d'incertitudes DL-AoD attendues, ou de l'ensemble de valeurs AoA ou d'incertitudes AoA attendues sont reçus par l'intermédiaire de données d'assistance, AD.

14. Appareil (2102) selon la revendication 12, dans lequel le décalage d'ordonnancement comprend de multiples valeurs de décalage, le décalage d'ordonnancement étant au moins l'un d'un décalage de synchronisation, décalage_K, décalageK ou décalage K, de préférence, dans lequel l'au moins un processeur est configuré en outre pour :
sélectionner une ou plusieurs : d'une valeur RSTD attendue dans l'ensemble de valeurs RSTD attendues sur la base d'une valeur de décalage actuelle des multiples valeurs de décalage, d'une valeur d'incertitude dans l'ensemble de valeurs d'incertitude sur la base de la valeur de décalage actuelle des multiples valeurs de décalage, d'une valeur DL-AoD ou incertitude DL_AoD attendue dans l'ensemble de valeurs DL-AoD ou d'incertitudes DL-AoD attendue, sur la base de la valeur de décalage actuelle des multiples valeurs de décalage, ou d'une valeur AoA ou incertitude AoA attendue dans l'ensemble de valeurs AoA ou d'incertitudes AoA attendues sur la base de la valeur de décalage actuelle des multiples valeurs de décalage.

15. Appareil (2102) selon la revendication 12, dans lequel l'au moins un processeur est configuré en outre pour :
transmettre, à l'entité de réseau, une demande de nouvelles données d'assistance, AD, sur la base d'un décalage d'ordonnancement spécifié, dans lequel la demande de nouvelles AD comporte le décalage d'ordonnancement mis à jour.
